# EUROPEAN PATENT SPECIFICATION

(11) **EP 4 580 249 B1**
(45) Date of publication and mention of the grant of the patent: **04.11.2026**
(21) Application number: 23869833.6
(22) Date of filing: 29.06.2023
(51) Int. Cl.: H04W 28/10, H04L 12/14, H04L 41/0894, H04M 15/00, H04W 28/02, H04W 4/24, H04W 28/24

(54) **COMMUNICATION METHOD, APPARATUS, AND SYSTEM**
KOMMUNIKATIONSVERFAHREN, -VORRICHTUNG UND -SYSTEM
PROCÉDÉ DE COMMUNICATION, APPAREIL ET SYSTÈME

(30) Priority: 30.09.2022 CN 202211217572
(43) Date of publication of application: 02.07.2025
(73) Proprietor: Huawei Technologies Co., Ltd., Shenzhen, Guangdong 518129 (CN)
(72) Inventor: ZHANG, Xuefei, Shenzhen, Guangdong 518129 (CN); WEI, Xinpeng, Shenzhen, Guangdong 518129 (CN); ZHOU, Xiaoyun, Shenzhen, Guangdong 518129 (CN); YAN, Yali, Shenzhen, Guangdong 518129 (CN)
(74) Representative: Pfenning, Meinig & Partner mbB
(86) International application number: PCT/CN2023/104164
(87) International publication number: WO 2024/066585

(56) References cited:
- WO-A1-2019/007387
- WO-A1-2021/140464
- WO-A1-2021/174885
- WO-A1-2022/166559
- CN-A- 110 048 959
- CN-A- 110 505 653
- CN-A- 114 503 776
- CN-A- 114 946 216
- US-A1- 2017 163 819
- "3rd Generation Partnership Project; Technical Specification Group Services and System Aspects; Policy and charging control framework for the 5G System (5GS); Stage 2 (Release 16)", 21 September 2021 (2021-09-21), XP052072714, Retrieved from the Internet <URL:https://ftp.3gpp.org/tsg_sa/WG2_Arch/Latest_SA2_Specs/DRAFT_INTERIM/Archive/23503-ga0_CR_Implemented.zip 23503-ga0_CR_Implemented.docx> [retrieved on 20210921]
- CATT: "KI #3, Sol #6: Update to clarify the additional desired QoS Set", 3GPP DRAFT; S2-2205258, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20220516 - 20220520, 22 May 2022 (2022-05-22), Mobile Competence Centre ; 650, route des Lucioles ; F-06921 Sophia-Antipolis Cedex ; France, XP052160729

## Description

### TECHNICAL FIELD

This application relates to the communication field, and in particular, to a communication method, apparatus, and system.

### BACKGROUND

Currently, some services with high real-time performance and large data capacity requirements, such as extended reality (extended reality, XR), have been gradually applied to a 5th generation (5th generation, 5G) mobile communication system. A data flow of one XR service may be mapped to a plurality of QoS flows, that is, the data flow of the XR service is transmitted over the plurality of QoS flows, to improve transmission reliability. For example, the data flow of the XR service may include a key frame (denoted as an I-frame), for example, a frame corresponding to a picture obtained by switching a lens, and a non-key frame (denoted as a P-frame), for example, a frame corresponding to a picture obtained by holding the lens still. Therefore, in a transmission process, the I-frame and the P-frame may be respectively mapped to two different QoS flows, to provide differentiated QoS guarantee, thereby ensuring that the I-frame can be successfully transmitted to a terminal and providing better service experience.

However, to transmit data flows of a same service over a plurality of QoS flows, a network needs to reserve corresponding resources for the plurality of QoS flows. Consequently, communication overheads for the service are increased, and communication efficiency is reduced.

3rd Generation Partnership Project; Technical Specification Group Services and System Aspects; Policy and charging control framework for the 5G System (5GS); Stage 2 (Release 16)", 3GPP DRAFT; 23503-GA0_CR_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 21 September 2021, discloses the 3rd Generation Partnership Project, specifically addressing the policy and charging control framework for 5G systems (Release 16). It outlines technical specifications and system aspects related to service management and charging mechanisms in 5G networks. This draft serves as an official guideline for implementing the policy control functions necessary to support efficient 5G network operation and service charging.

WO2019007387A1 discloses a method for sharing bandwidth among multiple uplink and/or downlink service data flows, the service data flows are included in at least one media subcomponent and the at least one media subcomponent is further included in at least one media component, the method comprising: receiving a message indicating support of bandwidth sharing; and generating at least one Policy and Charging Control (PCC) rule, the at least one PCC rule indicates bandwidth sharing at least among multiple uplink and/or downlink service data flows within a media component.

US2017163819A1 discloses a method, device and system for processing policy control. The method includes that: a policy enforcement function receives first resource sharing indication information provided by a Policy and Charging Rules Function (PCRF), wherein the first resource sharing indication information indicates that a second policy rule shares a resource with a first policy rule; and the policy enforcement function enforces a resource sharing operation for the second policy rule and the first policy rule according to the first resource sharing indication information.

### SUMMARY

The invention is defined by the appended set of claims. Embodiments of this application provide a communication method, apparatus, and system, to ensure communication efficiency without increasing communication overheads when a plurality of QoS flows are used to transmit data flows of a same service.

To achieve the foregoing objective, this application uses the following technical solutions.

According to a first aspect, a communication method is provided. The method includes: A policy control network element receives a QoS quality of service request message from an application function network element, and determines, based on a QoS requirement, M PCC policy and charging control rules corresponding to a service, to send the M PCC rules to a session management network element. The QoS request message includes the QoS requirement of the service of the application function network element, N of the M PCC rules include first indication information, the first indication information indicates data flows of the service corresponding to the PCC rules including the first indication information to share a bit rate of the service, the N PCC rules are mapped to at least two QoS flows used to carry the data flows of the service, M and N are integers greater than 1, and N is less than or equal to M. The session management network element receives the M PCC rules from the policy control network element, and sends first configuration information to a user plane network element, and/or sends second configuration information to an access network device, where the first configuration information or the second configuration information indicates the at least two QoS flows to share the bit rate of the service. The user plane network element transmits the data flows of the service based on the first configuration information; and/or the access network device transmits the data flow of the service based on the second configuration information.

It may be learned from the method according to the first aspect that, because the policy control network element may configure data flows of the service to share the bit rate, after these data flows are mapped to the at least two QoS flows, the QoS flows may also share the bit rate of the service. In other words, a network may reserve only one shared resource for these QoS flows, instead of separately reserving one resource for each QoS flow. Therefore, communication efficiency is ensured without increasing communication overheads when a plurality of QoS flows are used to transmit data flows of a same service.

In a possible design solution, that the data flows of the service corresponding to the PCC rules including the first indication information share the bit rate of the service means that a sum of bit rates for transmitting the data flows of the service at a moment needs to match the bit rate of the service. For example, the bit rate of the service includes at least one of the following: a GFBR guaranteed flow bit rate or an MFBR maximum flow bit rate. That the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR. In this way, a transmission requirement of the service is met.

In a possible design solution, that the at least two QoS flows share the bit rate of the service means that a sum of bit rates for transmitting the data flows of the service in the at least two QoS flows at a moment needs to match the bit rate of the service. For example, the bit rate of the service includes at least one of the following: a GFBR or an MFBR. That the sum of the bit rates for transmitting the data flows of the service in the at least two QoS flows needs to match the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR. In this way, a transmission requirement of the service is met.

In a possible design solution, that the session management network element sends first configuration information to a user plane network element, and/or sends second configuration information to an access network device includes: The session management network element maps the N PCC rules to the at least two QoS flows, and determines the first configuration information and/or the second configuration information, to send the first configuration information to the user plane network element, and/or send the second configuration information to the access network device.

In a possible design solution, the first configuration information includes a QoS flow list, the QoS flow list indicates QoS flows in the QoS flow list to share the bit rate of the service, and the QoS flows in the QoS flow list include the at least two QoS flows. All QoS flows that share the bit rate of the service may be quickly determined by using the QoS flow list, for example, by traversing the QoS flow list.

In a possible design solution, the first configuration information includes one QoS rule associated with the at least two QoS flows, and the QoS rule indicates the at least two QoS flows to share the bit rate of the service. In other words, an additional QoS rule may be introduced to indicate to share the bit rate of the service, to avoid adjusting an existing QoS rule. In this way, implementation difficulty can be reduced.

In a possible design solution, the first configuration information includes a QoS rule associated with each of the at least two QoS flows, and the QoS rule associated with each QoS flow indicates the at least two QoS flows to share the bit rate of the service. In other words, an additional information element may be introduced into the QoS rule to indicate to share the bit rate of the service, to avoid adjusting an existing information element in the QoS rule. In this way, implementation difficulty can be reduced.

Optionally, when the session management network element sends the first configuration information to the user plane network element, the method according to the first aspect further includes: The session management network element indicates the access network device not to perform bit rate control on the at least two QoS flows. In other words, when the user plane network element has ensured the bit rate of the service, the access network device may not perform the bit rate control, to reduce overheads of the access network device and improve running efficiency.

Further, that the session management network element indicates the access network device not to perform bit rate control on the at least two QoS flows includes: The session management network element sends, to the access network device, a QoS profile associated with each of the at least two QoS flows. The QoS profile associated with each QoS flow does not include a bit rate, to indicate the access network device not to perform bit rate control on the QoS flow. In this way, signaling overheads can be reduced, and communication efficiency can be improved. Alternatively, the QoS profile associated with each QoS flow includes second indication information, to indicate the access network device not to perform bit rate control on the QoS flow. In other words, an additional information element may be introduced to indicate to skip performing bit rate control, to avoid adjusting a structure of an existing information element. In this way, the implementation difficulty can be reduced.

Optionally, that the user plane network element transmits the data flows of the service based on the first configuration information includes: The user plane network element determines, based on the first configuration information, that the at least two QoS flows share the bit rate of the service, to send the data flow of the service based on the at least two QoS flows sharing the bit rate of the service, where the sum of the bit rates for transmitting the data flows of the service in the at least two QoS flows at a moment matches the bit rate of the service. For example, the bit rate of the service includes at least one of the following: a GFBR or an MFBR. That the sum of the bit rates for transmitting the data flows of the service in the at least two QoS flows matches the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR. In this way, it is ensured that data flow transmission can meet a requirement of the service.

Optionally, the bit rate of the service includes the GFBR. The method according to the first aspect may further include: If a bit rate for receiving a data flow of the service by the user plane network element is less than or equal to the GFBR, the user plane network element includes a first mark in the data flow of the service, where the first mark indicates the access network device to transmit the data flow of the service based on the bit rate of the data flow of the service, so that the access network device can perform rate control only on a data flow whose rate is relatively low (less than or equal to the GFBR of the service). In this way, the overheads of the access network device can be considered while a specific rate is guaranteed.

In a possible design solution, the second configuration information includes a QoS flow list, the QoS flow list indicates QoS flows in the QoS flow list to share the bit rate of the service, and the QoS flows in the QoS flow list include the at least two QoS flows. All QoS flows that share the bit rate of the service may be quickly determined by using the QoS flow list, for example, by traversing the QoS flow list.

In a possible design solution, the second configuration information includes at least two QoS profiles associated with the at least two QoS flows, and the QoS profile associated with each of the at least two QoS flows indicates the at least two QoS flows to share the bit rate of the service. In other words, an additional information element may be introduced into the QoS profile to indicate to share the bit rate of the service, to avoid adjusting an existing information element in the QoS profile. In this way, the implementation difficulty can be reduced.

Optionally, that the access network device transmits the data flows of the service based on the second configuration information includes: The access network device determines, based on the second configuration information, that the at least two QoS flows share the bit rate of the service, to send the data flow of the service based on the at least two QoS flows sharing the bit rate of the service. A sum of bit rates for transmitting the data flows of the service in the at least two QoS flows at a moment matches the bit rate of the service. For example, the bit rate of the service includes at least one of the following: a GFBR or an MFBR. That the sum of the bit rates for transmitting the data flows of the service in the at least two QoS flows matches the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR.

Optionally, when the session management network element sends the second configuration information to the access network device, the method according to the first aspect may further include: The session management network element indicates the user plane network element not to perform bit rate control on the at least two QoS flows. In other words, when the access network device has ensured the bit rate of the service, the user plane network element may not perform the bit rate control, to reduce overheads of the user plane network element and improve the running efficiency.

Further, that the session management network element indicates the user plane network element not to perform bit rate control on the at least two QoS flows includes: The session management network element sends, to the user plane network element, the QoS rule associated with each of the at least two QoS flows. The QoS rule associated with each QoS flow does not include a bit rate, to indicate the user plane network element not to perform bit rate control on the QoS flow. In this way, the signaling overheads can be reduced, and the communication efficiency can be improved. Alternatively, the QoS rule associated with each QoS flow includes third indication information, to indicate the user plane network element not to perform bit rate control on the QoS flow. In other words, an additional information element may be introduced to indicate to skip performing bit rate control, to avoid adjusting an existing information element. In this way, the implementation difficulty can be reduced.

In a possible design solution, the service includes an extended reality XR service or any other possible service. This is not limited.

According to a second aspect, a communication method is provided. The method includes: A policy control network element receives a QoS quality of service request message from an application function network element, and determines, based on a QoS requirement, M PCC policy and charging control rules corresponding to a service, to send the M PCC rules to a session management network element. The QoS request message includes the QoS requirement of the service of the application function network element, N of the M PCC rules include first indication information, the first indication information indicates data flows of the service corresponding to the PCC rules including the first indication information to share a bit rate of the service, the N PCC rules are mapped to at least two QoS flows used to carry the data flows of the service, M and N are integers greater than 1, and N is less than or equal to M.

In a possible design solution, that the data flows of the service corresponding to the PCC rules including the first indication information share the bit rate of the service means that a sum of bit rates for transmitting the data flows of the service at a moment needs to match the bit rate of the service. For example, the bit rate of the service includes at least one of the following: a GFBR guaranteed flow bit rate or an MFBR maximum flow bit rate. That the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR.

In a possible design solution, that the at least two QoS flows share the bit rate of the service means that a sum of bit rates for transmitting the data flows of the service in the at least two QoS flows at a moment needs to match the bit rate of the service. For example, the bit rate of the service includes at least one of the following: a GFBR or an MFBR. That the sum of the bit rates for transmitting the data flows of the service in the at least two QoS flows needs to match the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR.

In a possible design solution, the service includes an extended reality XR service.

In addition, for technical effects of the communication method according to the second aspect, refer to the technical effects of the method according to the first aspect. Details are not described herein again.

According to a third aspect, a communication method is provided. The method includes: A session management network element receives M PCC rules from a policy control network element, and sends first configuration information to a user plane network element, and/or sends second configuration information to an access network device. N of the M PCC rules include first indication information, the first indication information indicates data flows of a service corresponding to the PCC rules including the first indication information to share a bit rate of the service, M and N are integers greater than 1, N is less than or equal to M, the N PCC rules are mapped to at least two QoS flows used to carry the data flows of the service, and the first configuration information or the second configuration information indicates the at least two QoS flows to share the bit rate of the service.

In a possible design solution, that the data flows of the service corresponding to the PCC rules including the first indication information share the bit rate of the service means that a sum of bit rates for transmitting the data flows of the service at a moment needs to match the bit rate of the service. For example, the bit rate of the service includes at least one of the following: a GFBR guaranteed flow bit rate or an MFBR maximum flow bit rate. That the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR.

In a possible design solution, that the at least two QoS flows share the bit rate of the service means that a sum of bit rates for transmitting the data flows of the service in the at least two QoS flows at a moment needs to match the bit rate of the service. For example, the bit rate of the service includes at least one of the following: a GFBR or an MFBR. That the sum of the bit rates for transmitting the data flows of the service in the at least two QoS flows needs to match the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR.

In a possible design solution, that a session management network element sends first configuration information to a user plane network element, and/or sends second configuration information to an access network device includes: The session management network element maps the N PCC rules to the at least two QoS flows, and determines the first configuration information and/or the second configuration information, to send the first configuration information to the user plane network element, and/or send the second configuration information to the access network device.

In a possible design solution, the first configuration information includes a QoS flow list, the QoS flow list indicates QoS flows in the QoS flow list to share the bit rate of the service, and the QoS flows in the QoS flow list include the at least two QoS flows.

In a possible design solution, the first configuration information includes one QoS rule associated with the at least two QoS flows, and the QoS rule indicates the at least two QoS flows to share the bit rate of the service.

In a possible design solution, the first configuration information includes a QoS rule associated with each of the at least two QoS flows, and the QoS rule associated with each QoS flow indicates the QoS flow to share the bit rate of the service.

Optionally, when the session management network element sends the first configuration information to the user plane network element, the method according to the third aspect further includes: The session management network element indicates the access network device not to perform bit rate control on the at least two QoS flows.

Further, that the session management network element indicates the access network device not to perform bit rate control on the at least two QoS flows includes: The session management network element sends, to the access network device, a QoS profile associated with each of the at least two QoS flows. The QoS profile associated with each QoS flow does not include a bit rate, to indicate the access network device not to perform bit rate control on the QoS flow; or the QoS profile associated with each QoS flow includes second indication information, to indicate the access network device not to perform bit rate control on the QoS flow.

In a possible design solution, the second configuration information includes a QoS flow list, the QoS flow list indicates QoS flows in the QoS flow list to share the bit rate of the service, and the QoS flows in the QoS flow list include the at least two QoS flows.

In a possible design solution, the second configuration information includes at least two QoS profiles associated with the at least two QoS flows, and the QoS profile associated with each of the at least two QoS flows indicates the at least two QoS flows to share the bit rate of the service.

Optionally, when the session management network element sends the second configuration information to the access network device, the method according to the third aspect further includes: The session management network element indicates the user plane network element not to perform bit rate control on the at least two QoS flows.

Further, that the session management network element indicates the user plane network element not to perform bit rate control on the at least two QoS flows includes: The session management network element sends, to the user plane network element, a QoS rule associated with each of the at least two QoS flows, where the QoS rule associated with each QoS flow does not include a bit rate, to indicate the user plane network element not to perform bit rate control on the QoS flow; or the QoS rule associated with each QoS flow includes third indication information, to indicate the user plane network element not to perform bit rate control on the QoS flow.

In a possible design solution, the service includes an extended reality XR service.

In addition, for technical effects of the communication method according to the third aspect, refer to the technical effects of the method according to the first aspect. Details are not described herein again.

According to a fourth aspect, a communication method is provided. The method includes: A user plane network element receives first configuration information from a session management network element, and transmits data flows of a service based on the first configuration information. The data flows of the service are mapped to at least two QoS flows, and the at least two QoS flows share a bit rate of the service.

In a possible design solution, the first configuration information includes a QoS flow list, the QoS flow list indicates QoS flows in the QoS flow list to share the bit rate of the service, and the QoS flows in the QoS flow list include the at least two QoS flows.

In a possible design solution, the first configuration information includes one QoS rule associated with the at least two QoS flows, and the QoS rule indicates the at least two QoS flows to share the bit rate of the service.

In a possible design solution, the first configuration information includes a QoS rule associated with each of the at least two QoS flows, and the QoS rule associated with each QoS flow indicates the QoS flow to share the bit rate of the service.

In a possible design solution, that a user plane network element transmits data flows of a service based on the first configuration information includes: The user plane network element determines, based on the first configuration information, that the at least two QoS flows share the bit rate of the service, and sends the data flow of the service based on the at least two QoS flows sharing the bit rate of the service. A sum of bit rates for transmitting the data flows of the service in the at least two QoS flows at a moment matches the bit rate of the service.

For example, the bit rate of the service includes at least one of the following: a GFBR or an MFBR. That the sum of the bit rates for transmitting the data flows of the service in the at least two QoS flows matches the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR.

In a possible design solution, the bit rate of the service includes the GFBR, and the method according to the fourth aspect may further include: If a bit rate for receiving a data flow of the service by the user plane network element is less than or equal to the GFBR, the user plane network element includes a first mark in the data flow of the service, where the first mark indicates the access network device to transmit the data flow of the service based on the bit rate of the data flow of the service.

In a possible design solution, the service includes an extended reality XR service.

In addition, for technical effects of the communication method according to the fourth aspect, refer to the technical effects of the method according to the first aspect. Details are not described herein again.

According to a fifth aspect, a communication method is provided. The method includes: An access network device receives second configuration information from a session management network element, and transmits data flows of a service based on the second configuration information. The data flows of the service are mapped to at least two QoS flows, and the second configuration information indicates the at least two QoS flows to share a bit rate of the service.

In a possible design solution, the second configuration information includes a QoS flow list, the QoS flow list indicates QoS flows in the QoS flow list to share the bit rate of the service, and the QoS flows in the QoS flow list include the at least two QoS flows.

In a possible design solution, the second configuration information includes at least two QoS profiles associated with the at least two QoS flows, and the QoS profile associated with each of the at least two QoS flows indicates the at least two QoS flows to share the bit rate of the service.

In a possible design solution, that an access network device transmits data flows of a service based on the second configuration information includes: The access network device determines, based on the second configuration information, that the at least two QoS flows share the bit rate of the service, and sends the data flow of the service based on the at least two QoS flows sharing the bit rate of the service. A sum of bit rates for transmitting the data flows of the service in the at least two QoS flows at a moment matches the bit rate of the service.

For example, the bit rate of the service includes at least one of the following: a GFBR or an MFBR. That the sum of the bit rates for transmitting the data flows of the service in the at least two QoS flows matches the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR.

In a possible design solution, the service is an extended reality XR service.

In addition, for technical effects of the communication method according to the fifth aspect, refer to the technical effects of the method according to the first aspect. Details are not described herein again.

According to a sixth aspect, a communication apparatus is provided. The communication apparatus includes modules configured to perform the method according to the second aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module, and the storage module stores a program or instructions. When the processing module executes the program or the instructions, the communication apparatus is enabled to perform the method according to the second aspect.

It may be understood that the communication apparatus according to the fifth aspect may be a network device, for example, a policy control network element, may be a chip (system) or another part or component that may be disposed in a network device, or may be an apparatus including a network device. This is not limited in this application.

In addition, for technical effects of the communication apparatus according to the sixth aspect, refer to the technical effects of the method according to the second aspect. Details are not described herein again.

According to a seventh aspect, a communication apparatus is provided. The communication apparatus includes modules configured to perform the method according to the third aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module, and the storage module stores a program or instructions. When the processing module executes the program or the instructions, the communication apparatus is enabled to perform the method according to the third aspect.

It may be understood that the communication apparatus according to the seventh aspect may be a network device, for example, a session management network element, may be a chip (system) or another part or component that may be disposed in a network device, or may be an apparatus including a network device. This is not limited in this application.

In addition, for technical effects of the communication apparatus according to the seventh aspect, refer to the technical effects of the method according to the third aspect. Details are not described herein again.

According to an eighth aspect, a communication apparatus is provided. The communication apparatus includes modules configured to perform the method according to the fourth aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module, and the storage module stores a program or instructions. When the processing module executes the program or the instructions, the communication apparatus is enabled to perform the method according to the fourth aspect.

It may be understood that the communication apparatus according to the eighth aspect may be a network device, for example, a user plane network element, may be a chip (system) or another part or component that may be disposed in a network device, or may be an apparatus including a network device. This is not limited in this application.

In addition, for technical effects of the communication apparatus according to the eighth aspect, refer to the technical effects of the method according to the fourth aspect. Details are not described herein again.

According to a ninth aspect, a communication apparatus is provided. The communication apparatus includes modules configured to perform the method according to the fifth aspect, for example, a transceiver module and a processing module. For example, the transceiver module is configured to perform receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the ninth aspect, and the receiving module is configured to implement a receiving function of the communication apparatus according to the ninth aspect.

Optionally, the communication apparatus according to the ninth aspect may further include a storage module, and the storage module stores a program or instructions. When the processing module executes the program or the instructions, the communication apparatus is enabled to perform the method according to the fifth aspect.

It may be understood that the communication apparatus according to the ninth aspect may be a network device, for example, an access network device, may be a chip (system) or another part or component that may be disposed in a network device, or may be an apparatus including a network device. This is not limited in this application.

In addition, for technical effects of the communication apparatus according to the ninth aspect, refer to the technical effects of the method according to the fifth aspect. Details are not described herein again.

According to a tenth aspect, a communication apparatus is provided. The communication apparatus includes a processor. The processor is configured to perform the method according to any one of the possible implementations of the second aspect to the fifth aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

**In** a possible design solution, the communication apparatus according to the tenth aspect may further include a memory. The memory and the processor may be integrated together, or may be disposed separately. The memory may be configured to store a computer program and/or data related to performing the method according to any one of the possible implementations of the second aspect to the fifth aspect.

**In** embodiments of this application, the communication apparatus according to the tenth aspect may be the network device according to any one of the second aspect to the fifth aspect, a chip (system) or another part or component that may be disposed in the network device, or an apparatus including the network device.

**In** addition, for technical effects of the communication apparatus according to the tenth aspect, refer to the technical effects of the method according to any one of the implementations of the first aspect to the third aspect. Details are not described herein again.

According to an eleventh aspect, a communication apparatus is provided. The communication apparatus includes a processor. The processor is coupled to a memory, and the processor is configured to execute a computer program stored in the memory, to enable the communication apparatus to perform the method according to any one of the possible implementations of the second aspect to the fifth aspect.

**In** a possible design solution, the communication apparatus according to the eleventh aspect may further include a transceiver. The transceiver may be a transceiver circuit or an interface circuit. The transceiver may be used by the communication apparatus according to the eleventh aspect to communicate with another communication apparatus.

**In** embodiments of this application, the communication apparatus according to the eleventh aspect may be the network device according to any one of the second aspect to the fifth aspect, a chip (system) or another part or component that may be disposed in the network device, or an apparatus including the network device.

**In** addition, for technical effects of the communication apparatus according to the eleventh aspect, refer to the technical effects of the method according to any one of the implementations of the second aspect to the fifth aspect. Details are not described herein again.

According to a twelfth aspect, a communication apparatus is provided, and includes a processor and a memory. The memory is configured to store a computer program, and when the processor executes the computer program, the communication apparatus is enabled to perform the method according to any one of the implementations of the second aspect to the fifth aspect.

**In** a possible design solution, the communication apparatus according to the twelfth aspect may further include a transceiver. The transceiver may be a transceiver circuit or an interface circuit. The transceiver may be used by the communication apparatus according to the twelfth aspect to communicate with another communication apparatus.

In embodiments of this application, the communication apparatus according to the twelfth aspect may be the network device according to any one of the second aspect to the fifth aspect, a chip (system) or another part or component that may be disposed in the network device, or an apparatus including the network device.

In addition, for technical effects of the communication apparatus according to the twelfth aspect, refer to the technical effects of the method according to any one of the implementations of the second aspect to the fifth aspect. Details are not described herein again.

According to a thirteenth aspect, a communication system is provided. The communication system includes a policy control network element, a session management network element, a user plane network element, and an access network device. The policy control network element, the session management network element, the user plane network element, and the access network device are configured to perform the method according to the first aspect.

According to a fourteenth aspect, a computer-readable storage medium is provided, and includes a computer program or instructions. When the computer program or the instructions are run on a computer, the computer is enabled to perform the method according to any one of the possible implementations of the first aspect to the fifth aspect.

According to a fifteenth aspect, a computer program product is provided, and includes a computer program or instructions. When the computer program or the instructions are run on a computer, the computer is enabled to perform the method according to any one of the possible implementations of the first aspect to the fifth aspect.

### BRIEF DESCRIPTION OF DRAWINGS

FIG. 1 is a diagram of an architecture of a 5GS;
FIG. 2 is a diagram of a data connection session;
FIG. 3 is a first diagram of an architecture of a QoS flow;
FIG. 4 is a second diagram of an architecture of a QoS flow;
FIG. 5 is a schematic flowchart of a cloud VR service of a VR device;
FIG. 6 is a diagram of an architecture of a communication system according to an embodiment of this application;
FIG. 7A and FIG. 7B are a first schematic flowchart of a communication method according to an embodiment of this application;
FIG. 8A and FIG. 8B are a second schematic flowchart of a communication method according to an embodiment of this application;
FIG. 9A and FIG. 9B are a third schematic flowchart of a communication method according to an embodiment of this application;
FIG. 10 is a fourth schematic flowchart of a communication method according to an embodiment of this application;
FIG. 11 is a first diagram of a structure of a communication apparatus according to an embodiment of this application; and
FIG. 12 is a second diagram of a structure of a communication apparatus according to an embodiment of this application.

### DESCRIPTION OF EMBODIMENTS

For ease of understanding, the following first describes technical terms in embodiments of this application.
1. 5th generation (5th generation, 5G) mobile communication system (referred to as a 5G system (5G system, 5GS) for short):

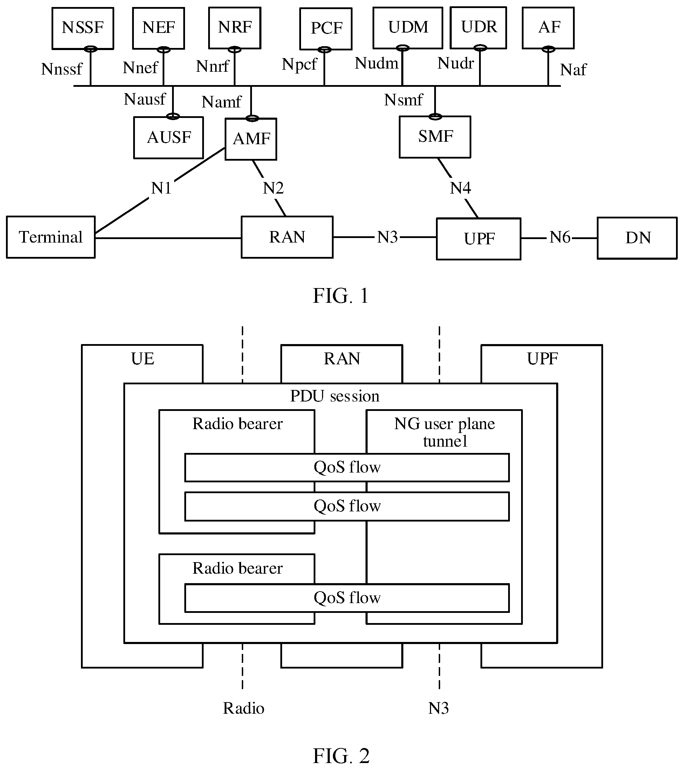

   FIG. 1 is a diagram of an architecture of a 5GS. As shown in FIG. 1, the 5GS includes an access network (access network, AN) and a core network (core network, CN), and may further include a terminal.

The terminal may be a terminal having receiving and sending functions, or may be a chip or a chip system that may be disposed in the terminal. The terminal may also be referred to as a user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted component, a vehicle-mounted chip, or a vehicle-mounted unit that is built in a vehicle as one or more components or units.

The foregoing AN is used to implement an access-related function, may provide a network access function for an authorized user in a specific area, and can determine transmission links with different quality based on a user level, a service requirement, and the like, to perform transmission of user data. The AN forwards a control signal and user data between the terminal and the CN. The AN may include an access network device, or may be referred to as a radio access network (radio access network, RAN) device. The CN is mainly responsible for maintaining subscription data of a mobile network, and provides functions such as session management, mobility management, policy management, and security authentication for the terminal. The CN mainly includes the following: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), unified data management (unified data management, UDM), unified data repository (unified data repository, UDR), and an application function (application function, AF).

As shown in FIG. 1, the UE accesses a 5G network via the RAN device. The UE communicates with the AMF through an N1 interface (N1 for short). The RAN communicates with the AMF through an N2 interface (N2 for short). The RAN communicates with the UPF through an N3 interface (N3 for short). The SMF communicates with the UPF through an N4 interface (N4 for short). The UPF accesses a data network (data network, DN) through an N6 interface (N6 for short). In addition, control plane functions such as the AUSF, the AMF, the SMF, the NSSF, the NEF, the NRF, the PCF, the UDM, the UDR, and the AF shown in FIG. 1 interact with each other through service-based interfaces. For example, a service-based interface exhibited by the AUSF includes Nausf, a service-based interface exhibited by the AMF includes Namf, a service-based interface exhibited by the SMF includes Nsmf, a service-based interface exhibited by the NSSF includes Nnssf, a service-based interface exhibited by the NEF includes Nnef, a service-based interface exhibited by the NRF includes Nnrf, a service-based interface exhibited by the PCF includes Npcf, a service-based interface exhibited by the UDM includes Nudm, a service-based interface exhibited by the UDR includes Nudr, and a service-based interface exhibited by the AF includes Naf.

The RAN device may be a device that provides access for the terminal. For example, the RAN device may include an access network device in a next generation mobile communication system, for example, a 6G access network device like a 6G base station. Alternatively, in a next generation mobile communication system, the network device may be named in another manner, which falls within the protection scope of embodiments of this application. This is not limited in this application. Alternatively, the RAN device may include a gNB in 5G, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (centralized unit, CU) or a distributed unit (distributed unit, DU), an RSU having a base station function, a wired access gateway, or a 5G core network network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The UPF is mainly responsible for user data processing (forwarding, receiving, charging, and the like). For example, the UPF may receive user data from the data network (data network, DN), and forward the user data to the terminal via the access network device. The UPF may also receive the user data from the terminal via the access network device, and forward the user data to the DN. The DN is an operator network that provides a data transmission service for a user, for example, an internet protocol (internet protocol, IP) multi-media service (IP multi-media service, IMS), and an internet (internet). The DN may be an external network of an operator, or may be a network controlled by an operator, and is configured to provide a service for the terminal device. In a protocol data unit (protocol data unit, PDU) session, the UPF that is directly connected to the DN through the N6 is also referred to as a protocol data unit session anchor (protocol data unit Session Anchor, PSA).

The AUSF is mainly configured to perform the security authentication on the terminal.

The AMF is mainly used for the mobility management in the mobile network, for example, user location update, registration of the user with a network, and user handover.

The SMF is mainly used for the session management in the mobile network, for example, session establishment, modification, and release. A specific function is, for example, allocating an internet protocol (internet protocol, IP) address to the user, or selecting a UPF that provides a data packet forwarding function.

The PCF mainly supports providing a unified policy framework to control a network behavior, and providing a policy rule for a control layer network function, and is also responsible for obtaining policy-decision-related subscription information of the user. The PCF may provide policies, such as a quality of service (quality of service, QoS) policy and a slice selection policy, to the AMF and the SMF.

The NSSF is mainly configured to select a network slice for the terminal.

The NEF is mainly configured to support capability and event exposure. For example, the NEF may open some capabilities of the 5G network to a third-party application through an application programming interface (application program interface, API), and the third-party application obtains some capabilities of the 5G network by invoking an API provided by the NEF via the AF, so that the third-party application can control some behaviors of the 5G network and the terminal.

The UDM is mainly configured to store user data, for example, subscription data and authentication/authorization data.

The UDR is mainly configured to store structured data. Stored content includes subscription data, policy data, externally exposed structured data, and application-related data.

The AF mainly supports interaction with the CN to provide a service, for example, affecting a data routing decision-making and a policy control function, or providing some third-party services for a network side.

It may be understood that the function mentioned in embodiments of this application may also be represented as a functional network element or a functional entity. For example, the UPF may be represented as a UPF network element, the AMF may be represented as an AMF network element, the SMF may be represented as an SMF network element, the PCF may be represented as a PCF network element, the rest may be deduced by analogy. This is not limited.

### 2. QoS:

A UE and an UPF may establish a data connection session (for example, a protocol data unit (protocol data unit, PDU) session (session), or may be another session, for example, an IP-CAN session). The PDU session is used as an example for descriptions of the method in the following. For a PDU session, a QoS flow (flow) is a minimum granularity for distinguishing QoS. The QoS flow may be a QoS flow that supports guaranteed flow bit rate (guaranteed bit rate, GBR) QoS, that is, a GBR QoS flow, or a QoS flow that supports non-guaranteed flow bit rate (non-guaranteed bit rate, non-GBR) QoS, that is, a non-GBR QoS flow. One PDU session may include a plurality of QoS flows, for example, support a maximum of 64 QoS flows. Each QoS flow has a corresponding QoS flow identifier (QoS flow ID, QFI), to distinguish between different QoS flows. User-plane service flows with a same QFI may be mapped to a same QoS flow, so that a same service forwarding processing mode (for example, scheduling) can be used to process the service flows.

FIG. 2 is a diagram of a data connection session. As shown in FIG. 2, one data connection session, for example, a PDU session, may correspond to a plurality of radio bearers (radio bearers, RBs) on an air interface, and one radio bearer may further include one or more QoS flows, that is, carry one or more QoS flows.

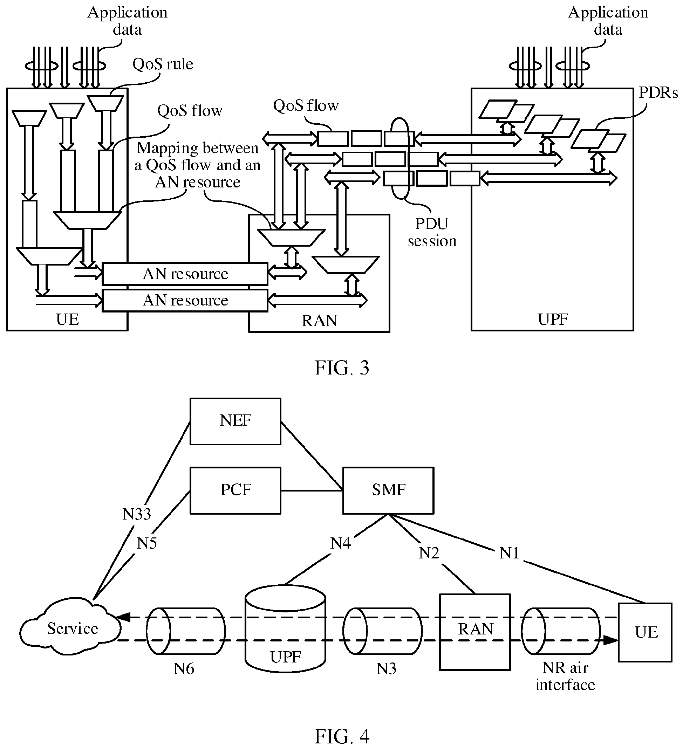

FIG. 3 is a first diagram of an architecture of a QoS flow. As shown in FIG. 3, a QoS profile is at a QoS flow level, that is, configuration is performed at a granularity of the QoS flow. For example, a feature of the QoS flow may be indicated by using some parameters, and an SMF preconfigures, establishes, or modifies a corresponding QoS flow by configuring these parameters. For example, for a QoS flow, these parameters include a QoS profile (QoS profile) on a RAN device side, a QoS rule (QoS rule) on a UE side, and a packet detection rule (packet detection rule, PDR) and a QoS enforcement rule (QoS enforcement rule, QER) that are on a UPF side.

The QoS profile includes an uplink QoS profile and/or a downlink QoS profile, and is configured by the SMF to the RAN device through an N2 interface, or is preconfigured by the RAN device. In an example, the QoS profile may include a 5G QoS identifier (5G quality identity, 5QI), an allocation and retention priority (assign and retain priorities, ARP), a guaranteed flow bit rate (guaranteed flow bit rate, GFBR), a maximum flow bit rate (maximum flow bit rate, MFBR), a maximum packet loss rate (maximum packet loss rate, MPLR), and a reflective QoS attribute (reflective QoS attribute, RQA).

The 5QI indicates a radio characteristic of the QoS flow. For example, the 5QI includes at least one of the following: a resource type, a priority, a data delay (packet delay budget, PDB), a packet error rate (packet error rate, PER), an average window, or a maximum data burst (maximum data burst, MDB) volume. The resource type indicates a type of the QoS flow. For example, the QoS flow is a GBR QoS flow or includes a non-GBR QoS flow. The priority indicates a scheduling priority of the QoS flow on an air interface, and may be specifically priorities of QoS flows of different UEs or priorities of different QoS flows of a same UE. The PDB indicates an upper limit of possible delayed time of a data packet of the QoS flow between the UE and a UPF (includes a UPF used as an N6 termination point). The PDB may include: a data delay of an access network (AN PDB) and a data delay of a core network (CN PDB). The AN PDB is a data delay between the UE and the AN, that is, the RAN device. The CN PDB is a data delay between the AN and the UPF including the UPF used as the N6 termination point. The AN PDB may be determined by subtracting the CN PDB from the PDB. The average window is a time period used to determine a GFBR and an MFBR of the GBR QoS flow. The MDB indicates a maximum volume of data that the AN needs to serve or for transmission in a periodicity of the AN PDB.

The ARP indicates a priority of the QoS flow on a next generation (next generation, NG) interface, where the priority of the QoS flow on the next generation interface may be specifically priorities of QoS flows of different UEs or priorities of different QoS flows of a same UE.

The GFBR indicates a guaranteed data rate for the GBR QoS flow, where the guaranteed data rate for the GBR QoS flow includes an uplink guaranteed data rate and a downlink guaranteed data rate. The MFBR indicates a maximum data rate for the GBR QoS flow, where the maximum data rate for the GBR QoS flow includes a maximum uplink data rate and a maximum downlink data rate.

The MPLR indicates a maximum packet loss rate that can be tolerated by a QoS flow. The MPLR is applicable only to GBR QoS.

The reflective QoS attribute indicates whether an uplink of the non-GBR QoS flow complies with mirror mapping, that is, whether an uplink QoS rule may be derived from a downlink QoS rule.

FIG. 4 is a second diagram of an architecture of a QoS flow. As shown in FIG. 4, a QoS rule is mainly used by a UE to classify and mark an uplink user plane data service, for example, associate uplink data with a corresponding QoS flow based on the QoS rule. The QoS rule may include a QFI of a QoS flow associated with the QoS rule, a data packet filter set (filter list) corresponding to the QoS flow, and a priority of the QoS flow. The data packet filter set is mainly used to associate uplink data with a corresponding QoS flow. For example, if an ID (for example, an IP 5-tuple) of an uplink data packet matches an ID in the data packet filter set, that is, the uplink data packet matches a corresponding QoS rule, the UE associates the uplink data packet with a QoS flow corresponding to the QoS rule. If the ID of the uplink data packet does not match the ID in the data packet filter set, that is, the uplink data packet does not match a corresponding QoS rule, the UE discards the uplink data. The QoS rule may be configured by an SMF to the UE through an N1 interface, or may be derived by the UE by using a reflective QoS mechanism. For example, if a downlink QoS rule is configured, the UE derives an uplink QoS rule based on the downlink QoS rule. In addition, one QoS flow may have a plurality of QoS rules. One default QoS rule may be configured for each PDU session, and the default QoS rule is associated with one QoS flow.

A PDR is configured by the SMF to a UPF through an N4 interface. The PDR may include an uplink PDR and a downlink PDR. The uplink PDR is used by the UPF to classify and mark an uplink user plane data service. As shown in FIG. 4, the UPF associates uplink data with a corresponding QoS flow based on the uplink PDR. The downlink PDR is used by the UPF to classify and mark a downlink user plane data service. As shown in FIG. 4, the UPF associates downlink data with a corresponding QoS flow based on the downlink PDR. If a data packet does not match any uplink PDR or downlink PDR, the UPF discards the data packet. A QER is configured by the SMF to the UPF through the N4 interface. The QER may be associated with the PDR, and is used by the UPF to control a corresponding QoS flow. For example, after the UPF associates the downlink data with the corresponding QoS flow based on the downlink PDR, the UPF may perform rate control on the QoS flow by using a QER associated with the downlink PDR. For example, the downlink data is transmitted based on a GFBR and an MFBR.

It may be understood that a data flow is an IP flow at an IP layer, the data flow is a QoS flow at a non-access stratum (non-access stratum, NAS) layer, and the data flow is a data resource bearer (data radio bearer, DRB) at an access stratum (access stratum, AS) layer. Therefore, there are two mapping relationships for the QoS flow: a mapping relationship between the QoS flow and the IP flow and a mapping relationship between the QoS flow and the DRB.

### 3. Mapping mechanism:

The mapping mechanism is a process of associating a service data flow with a QoS flow that is considered to be used to transmit the service data flow. The service data flow is defined in a PCC rule by using a service data flow (service data flow, SDF) model. The mapping mechanism includes the following steps.

Step 1: Session mapping. In other words, one-to-one correspondence is established between an application function session (AF session) and a PDU session.

Step 2: PCC rule authorization. In other words, a PCF authorizes the PCC rule, and allocates a QoS parameter for the PCC rule.

Step 3: QoS flow mapping. In other words, the PCC rule is associated with a QoS flow in the PDU session. The QoS flow mapping is performed by using the following mapping parameters: a 5QI, an ARP, QoS notification control (QoS notification control, QNC) (if available in the PCC rule), a priority (if available in the PCC rule), an average window (if available in the PCC rule), and a maximum data burst volume (maximum data burst volume, MDBV) (if available in the PCC rule).

For example, when the PCF provides the PCC rule, an SMF may determine whether a QoS flow whose QoS parameters are the same as the mapping parameters in step 3 exists. If such a QoS flow does not exist, the SMF determines a QoS parameter of a new QoS flow by using the parameter in the PCC rule, and establishes the new QoS flow based on the QoS parameter. In this case, the PCC rule is mapped to the new QoS flow. If the QoS flow whose QoS parameters are the same as the mapping parameters exists, the SMF maps the PCC rule to the existing QoS flow. In addition, if the PCF requests to map the PCC rule to a QoS flow associated with a default QoS rule, the SMF may not perform the foregoing determining.

In addition, "mapping" is merely an example description, and may be replaced with any other possible description, for example, "binding" or "corresponding". This is not specifically limited herein.

### 4. Service:

With continuous development of a 5GS, a data transmission delay of the 5GS is continuously reduced, and a transmission capacity is increasingly large. Some services that have high real-time performance and high data capacity requirements, such as extended reality (extended reality, XR) and tactile internet services, have gradually been introduced into the 5GS. Typical XR is virtual reality (virtual reality, VR). The VR is a revolutionary technology that completely disrupts content consumption and communication consumption. A VR technology provides users with a more in-depth and immersive experience by blocking users' sight and immersing users' senses in independent and brand new virtual space. Currently, the VR has been applied to education, entertainment, military affairs, medical care, environmental protection, transportation, public health, and other fields closely related to people's production and life.

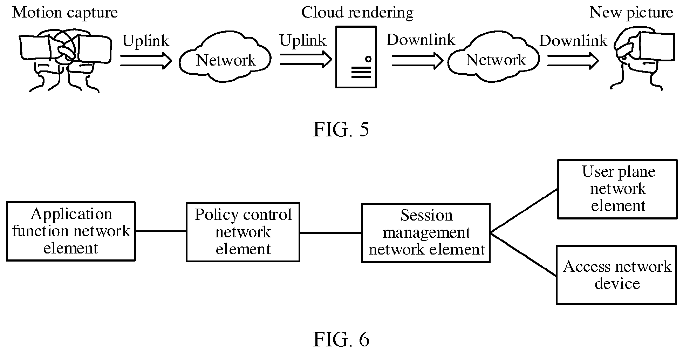

FIG. 5 is a schematic flowchart of a cloud (cloud) VR service of a VR device. As shown in FIG. 5, the VR device may capture motion information of a user, for example, a head motion, a hand motion, and squatting/stand-up, and send the motion information to a cloud server over a network (for example, a 5G network). The cloud server performs rendering based on the motion information of the user to generate an image, and sends the image to the VR device over the network for viewing. The cloud VR service is usually periodic. For example, the VR device may periodically send an uplink control small packet that includes a signal of head rotation or a signal of an interaction device like a handle, and a periodicity is about 2.5 ms (ms) to 5 ms. The cloud server may generate a video frame based on a frame rate and send the video frame to a terminal over the network. For example, the cloud server may generate a frame every 16.67 ms, to meet a frame rate of 60 frames per second (frames per second, FPS).

In an XR service, different types of frames in a service flow have different importance. Different types of frames may include a key frame (denoted as an I-frame) and a non-key frame (denoted as a P-frame). The I-frame may be a frame including relatively important service data, for example, a frame corresponding to an image that a lens switches to. The P-frame may be a frame including relatively minor service data, for example, a frame corresponding to an image obtained by holding the lens still. In a service flow transmission process, it is usually needed to ensure that the I-frame can be successfully transmitted to the terminal, for example, the VR device, to provide better service experience. For example, when the network processes a service flow, different QoS flows may be used to carry different types of frames, to provide differentiated QoS guarantee for frames of different importance, to ensure that the I-frame can be successfully transmitted to the terminal.

However, to transmit data flows of a same service over a plurality of QoS flows, for example, different types of frames, the network needs to reserve a corresponding resource for the plurality of QoS flows. Consequently, communication overheads for the service are increased, and communication efficiency is reduced. For example, a QoS requirement of the service indicates that the service needs a GFBR of 10 megabits per second (million bits per second, Mbps). If the data flows of the service are mapped to a QoS flow, the network needs to reserve, for the QoS flow, a resource corresponding to the GFBR of 10 Mbps. However, if the data flows of the service are mapped to two QoS flows, the network needs to reserve, for each QoS flow, a resource corresponding to the GFBR of 10 Mbps, and a resource corresponding to a GFBR of 20 Mbps needs to be reserved in total. In this case, the communication overheads are increased, and the communication efficiency is reduced.

For the foregoing technical problem, in embodiments of this application, the following technical solutions are provided, to ensure the communication efficiency without increasing the communication overheads when a plurality of QoS flows are used to transmit data flows of a same service.

The following describes technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, a 5th generation (5th generation, 5G) mobile communication system, for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are consistent when differences of the terms are not emphasized. The terms "of (of)", "corresponding, relevant (corresponding, relevant)", and "corresponding (corresponding)" may be interchangeably used sometimes. It should be noted that meanings expressed by the terms are consistent when differences of the terms are not emphasized. In addition, "/" mentioned in this application may indicate an "or" relationship.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 6 is first used as an example to describe in detail a communication system applicable to embodiments of this application. For example, FIG. 6 is a diagram of an architecture of a communication system to which a communication method is applicable according to an embodiment of this application.

As shown in FIG. 6, the communication system is applicable to the foregoing 5GS, and includes an application function network element, a policy control network element, a session management network element, a user plane network element, and an access network device.

The application function network element may be an AF or any other possible network element. This is not limited. The application function network element may be configured to provide a service of the application function network element, for example, a QoS requirement of an XR service, for the policy control network element.

The policy control network element may be a PCF or any other possible network element. This is not limited. The policy control network element may be configured to: determine, based on a QoS requirement, M PCC rules corresponding to the service of the application function network element, and send the M PCC rules to the session management network element. N of the M PCC rules include first indication information, the first indication information indicates data flows of the service corresponding to the PCC rules including the first indication information to share a bit rate of the service, the N PCC rules are mapped to at least two QoS flows used to carry the data flows of the service, M and N are integers greater than 1, and N is less than or equal to M.

The session management network element may be an SMF or any other possible network element. This is not limited. The session management network element may send first configuration information to the user plane network element, and/or send second configuration information to the access network device. The first configuration information or the second configuration information indicates the at least two QoS flows to share the bit rate of the service.

The user plane network element may be a UPF or any other possible network element. This is not limited. The user plane network element may transmit the data flows of the service based on the first configuration information, in other words, transmit the data flows of the service over the at least two QoS flows in a manner of sharing the bit rate of the service.

The access network device may be a RAN device or any other possible device. This is not limited. The access network device may transmit the data flows of the service based on the second configuration information, in other words, transmit the data flows of the service over the at least two QoS flows in the manner of sharing the bit rate of the service.

It may be understood that, that data flows of a same service are mapped to the at least two QoS flows may indicate that different data packets of the data flow are mapped to the at least two QoS flows. Because different data packets are usually transmitted in a time-division manner, in this case, bit rate addition is not caused when different data packets of data flows of a same service are transmitted, and bit rates of the data packets may still match a bit rate of the service, for example, the bit rates of the data packets do not exceed an MFBR of the service. For example, the MFBR of the service is 12 Mbps, a bit rate for transmitting a data packet 1 over a QoS flow 1 at a moment t1 is 10 Mbps, and a bit rate for transmitting a data packet 2 over a QoS flow 2 at a moment t2 is 8 Mbps. Neither of the bit rates exceeds 12 Mbps. Alternatively, even if different data packets of a data flow of a same service are transmitted simultaneously, under control of the application function network element, bit rates of the simultaneously transmitted data packets may still match a bit rate of the service after the bit rates of the simultaneously transmitted data packets are added. For example, an MFBR of the service is 12 Mbps. The application function network element may control a bit rate for transmitting a data packet 1 at a moment t1 to be 8 Mbps, and a bit rate for transmitting a data packet 2 at a moment t1 to be 4 Mbps. A sum of the bit rates does not exceed 12 Mbps. In other words, regardless of time-division transmission or simultaneous transmission, at a moment, a sum of bit rates for transmitting different data packets of a data flow of a same service in the at least two QoS flows may still match the bit rate of the service. On this basis, a network may configure the at least two QoS flows to share the bit rate of the service, in other words, the network may reserve only one shared resource for the at least two QoS flows, instead of separately reserving one resource for each QoS flow. Therefore, communication efficiency is ensured without increasing communication overheads when a plurality of QoS flows are used to transmit data flows of a same service.

It may be understood that the data packet mentioned in this embodiment of this application may also be understood as a frame, a subframe, a data subflow, or the like. This is not limited. Different types of data packets may also be understood as different types of frames, for example, an I-frame and a P-frame, different types of subframes, or different types of data subflows. This is not limited. For ease of understanding, the following uses a data packet as an example for description.

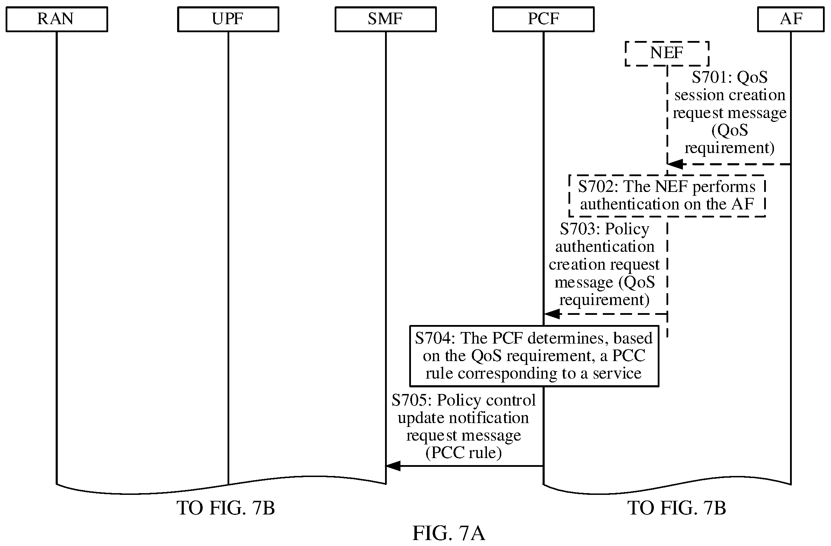

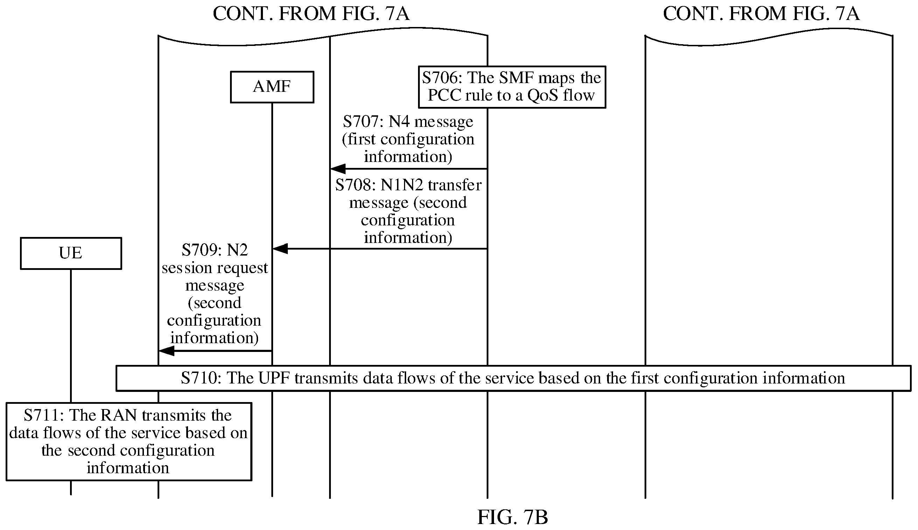

With reference to FIG. 7A and FIG. 7B to FIG. 10, the following specifically describes an interaction procedure between network elements/devices in the foregoing communication system by using method embodiments. The communication method provided in embodiments of this application is applicable to the foregoing communication system, and is specifically applied to various scenarios mentioned in the foregoing communication system. Details are described below.

### Scenario 1:

FIG. 7A and FIG. 7B are a first schematic flowchart of a communication method according to an embodiment of this application. The communication method is applicable to the foregoing communication system, and relates to interaction among an AF, a PCF, an SMF, a UPF, and a RAN. In the scenario 1, the PCF may provide a PCC rule for the SMF based on a QoS requirement of a service provided by the AF, to indicate that at least two QoS flows used to carry data flows of the service need to share a bit rate of the service. In this way, the SMF may separately configure the UPF and the RAN, so that the UPF and the RAN can transmit the data flows of the service in a manner of sharing the bit rate of the service.

Specifically, as shown in FIG. 7A and FIG. 7B, a procedure of the communication method is shown as follows.

S701: The AF sends a QoS session creation request (Nnef_AFsessionWithQoS_Create Request) message to a NEF. The NEF receives the QoS session creation request message from the AF.

The AF may be a third-party application function outside a core network. The QoS session creation request message may include the QoS requirement of the service of the AF, to indicate a condition that needs to be met in a transmission process of the data flow of the service.

The service of the AF may be an XR service or any other possible service. This is not limited.

The QoS requirement may include an identifier of the service and QoS information of the data flow of the service.

The identifier of the service may be used to describe the data flow of the service, or may be referred to as flow description information (flow description, Fd). The data flow of the service may include different types of data packets of the service. For example, the data flow of the service may be a data flow, and the data flow may include different types of data packets of the service. Alternatively, the data flow of the service may be a plurality of data flows, each data flow may include at least one type of data packet of the service, and there are a plurality of types of data packets in total. On this basis, the identifier of the service may be specifically IP 5-tuples of different types of data packets of the service, or any other possible implementation. This is not limited.

The QoS information of the data flow of the service may be QoS information of different types of data packets of the service, and indicates that different types of data packets of the service need to meet the QoS information in a transmission process. For example, different types of data packets of the service may include at least two types of data packets, and QoS information of each type of data packet may include at least one of the following: an identifier of the data packet and a bit rate of the data packet. The identifier of each type of data packet may indicate a specific type of the data packet, for example, a key data packet (an I-frame, or a type I data packet) of the XR service and a non-key data packet (a P-frame, or a type P data packet) of the XR service. The bit rate of each type of data packet may indicate that rate guarantee needs to be performed for the data packet based on the bit rate in a transmission process, and may include at least one of the following: a GFBR of the data packet or an MFBR of the data packet. In this case, because the at least two types of data packets need to share the bit rate of the service, bit rates of all data packets in the at least two types of data packets may be the same, and may be understood as the bit rate of the service. For example, the GFBR of each type of data packet may be understood as a GFBR of the service, and the MFBR of each type of data packet may be understood as a MFBR of the service.

Optionally, the QoS requirement may further indicate whether the data flow of the service may share the bit rate of the service, or whether different types of data packets included in the data flow of the service may share the bit rate of the service. That the data flows of the service share the bit rate of the service means that a sum of bit rates for transmitting the data flows of the service at a moment needs to match the bit rate of the service. For example, the sum of the bit rates for transmitting the data flows of the service is less than or equal to the GFBR of the service, in other words, a sum of bit rates for transmitting different types of data packets included in the data flow of the service is less than or equal to the GFBR of the service. Alternatively, the sum of the bit rates for transmitting the data flows of the service is greater than the GFBR of the service, and the sum of the bit rates for transmitting the data flows of the service is less than or equal to the MFBR of the service, in other words, a sum of bit rates for transmitting different types of data packets included in the data flow of the service is greater than the GFBR of the service, and the sum of bit rates for transmitting different types of data packets included in the data flow of the service is less than or equal to the MFBR of the service. That the data flows of the service share the bit rate of the service means that a bit rate for transmitting the data flows of the service at a moment needs to match the bit rate of the service. For example, the bit rate for transmitting the data flows of the service is less than or equal to the GFBR of the service, in other words, a bit rate for transmitting each type of data packet included in the data flow of the service is less than or equal to the GFBR of the service. Alternatively, the bit rate for transmitting the data flows of the service is greater than the GFBR of the service, and the bit rate for transmitting the data flows of the service is less than or equal to the MFBR of the service, in other words, a bit rate for transmitting each type of data packet included in the data flow of the service is greater than the GFBR of the service, and the bit rate for transmitting each type of data packet included in the data flow of the service is less than or equal to the MFBR of the service.

Specifically, different types of data packets of the service that are included in the data flow of the service are M types of data packets, where M is an integer greater than 1. For N of the M types of data packets, the N types of data packets may belong to a same data flow or different data flows of the service. This is not limited. N is an integer greater than 1 and less than or equal to M. QoS information of each of the N types of data packets may further include a first sharing identifier, to indicate the data packet to share the bit rate of the service. N pieces of QoS information including the first sharing identifier may be combined to indicate the N types of data packets to share the bit rate of the service. For M-N of the M types of data packets, QoS information of each of the M-N types of data packets may not include the first sharing identifier, to indicate the data packet not to share the bit rate of the service. M-N pieces of QoS information that do not include the first sharing identifier may be combined to indicate the M-N types of data packets not to share the bit rate of the service.

For ease of understanding, XR service is continued to be used as an example for description.

A data flow of the XR service may include a video flow and an audio flow, and a data packet of the video flow may include a type I data packet and a type P data packet. The QoS requirement includes an IP 5-tuple, QoS information 1, QoS information 2, and QoS information 3. The QoS information 1 includes an identifier of the type I data packet, the first sharing identifier, a GFBR of 10 Mbps, and an MFBR of 12 Mbps, to indicate that the type I data packet needs to share the bit rate of the service, for example, the GFBR of 10 Mbps and the MFBR of 12 Mbps. The QoS information 2 includes an identifier of the type P data packet, the first sharing identifier, a GFBR of 10 Mbps, and an MFBR of 12 Mbps, to indicate that the type P data packet needs to share the bit rate of the service. The QoS information 3 includes an identifier of an audio data packet, a GFBR of 8 Mbps, and an MFBR of 8 Mbps. In this case, the QoS information 1 and the QoS information 2 may be combined to indicate that the type I data packet and the type P data packet need to share the bit rate of the service. The audio data packet corresponding to the QoS information 3 does not need to share the bit rate of the service.

It may be understood that the first sharing identifier may alternatively be directly carried in the QoS requirement, and may be an information element at a same level as the QoS information in the QoS requirement. In this way, an information element at a same level may be combined to indicate that each type of data flow of the service may share the bit rate of the service. In addition, the first sharing identifier is an example name, or may be replaced with any possible name, for example, first sharing information or a first sharing indication. This is not limited.

It may be further understood that the AF may alternatively choose not to include the first sharing identifier in the QoS information or the QoS requirement, and the PCF may determine whether the data flow of the service needs to share the bit rate of the service. For example, the PCF may determine, based on a subscription relationship between the PCF and the AF, whether the service indicated by the QoS request message is a service subscribed by the AF. If the service indicated by the QoS request message is the service subscribed by the AF, the PCF determines that the data flow of the service may share the bit rate of the service. If the service indicated by the QoS request message is not the service subscribed by the AF, the PCF determines that the data flow of the service cannot share the bit rate of the service. Alternatively, the PCF may determine, based on a subscription relationship between the PCF and the service, whether the service indicated by the QoS request message is a subscribed service. If the service indicated by the QoS request message is the subscribed service, the PCF determines that the data flow of the service needs to share the bit rate of the service. If the service indicated by the QoS request message is not the subscribed service, the PCF determines that the data flow of the service does not need to share the bit rate of the service.

S702: The NEF performs authentication on the AF.

The NEF may perform the authentication on the AF based on the QoS session creation request message, to determine whether the AF is trusted. For details, refer to related descriptions in chapter 6 in TS 29.522. Details are not described. When the authentication succeeds, the NEF performs S703. When the authentication fails, the procedure ends.

S703: The NEF sends a policy authorization creation request (Npcf_PolicyAuthorization_Create Request) message to the PCF. The PCF receives the policy authentication creation request message from the NEF.

The policy authentication creation request message may carry the foregoing QoS requirement.

It may be understood that S701 to S703 are optional steps. For example, the AF is an application function in the core network, and the AF may directly send, to the PCF, the policy authorization creation request (Npcf_Policy Authorization Create Request) message carrying the QoS requirement.

S704: The PCF determines, based on the QoS requirement, a PCC rule corresponding to the service.

The M types of data packets may correspond to M PCC rules. For the N of the M types of data packets, N PCC rules corresponding to the N types of data packets may include first indication information (which may also be referred to as a second sharing identifier). In other words, each of the N PCC rules may include one piece of first indication information. The first indication information may indicate the data flows of the service corresponding to the PCC rules including the first indication information to share the bit rate of the service, in other words, indicate a type of data packet/data subflow/frame corresponding to the PCC rules including the first indication information to share the bit rate of the service. For example, each of the N PCC rules may further include the following information: the identifier of the service, an identifier of a data packet corresponding to the PCC rule, the bit rate of the service, and the first indication information. The information may be combined to indicate a type of data packet corresponding to the PCC rules including the first indication information to share the bit rate of the service. In this case, the N PCC rules may be combined to indicate that the N types of data packets may share the bit rate of the service. For the M-N of the M types of data packets, M-N PCC rules corresponding to the M-N types of data packets may not include the first indication information, to indicate that the M-N types of data packets may not share the bit rate of the service.

For ease of understanding, the XR service is continued to be used as an example. The data flow of the XR service may include the video flow and the audio flow, the data packet of the video flow may include the type I data packet and the type P data packet, and PCC rules may include a PCC rule 1, a PCC rule 2, and a PCC rule 3.

The PCC rule 1 may include an IP 5-tuple, the identifier of the type I data packet, the GFBR of 10 Mbps, the MFBR of 12 Mbps, and the second sharing identifier, to indicate that the type I data packet needs to share the bit rate of the service, for example, the GFBR of 10 Mbps and the MFBR of 12 Mbps. The PCC rule 2 may include an IP 5-tuple, the identifier of the type P data packet, the GFBR of 10 Mbps, the MFBR of 12 Mbps, and the second sharing identifier, to indicate that the type P data packet needs to share the bit rate of the service. The PCC rule 3 may include an IP 5-tuple, the identifier of the audio data packet, the GFBR of 8 Mbps, and the MFBR of 8 Mbps. The PCC rule 1 and the PCC rule 2 may be combined to indicate that the type I data packet and the type P data packet need to share the bit rate of the service, and the PCC rule 3 indicates that the audio data packet does not need to share the bit rate of the service.

The PCF may determine a corresponding PCC rule for each type of data packet of the service based on the QoS requirement. For example, the PCF may determine, based on a total of N pieces of QoS information that are of the N types of data packets and that are obtained from the QoS requirement, that the N PCC rules need to be generated. The PCF may encapsulate a parameter in QoS information of an i^{th} type of data packet in the N types of data packets, for example, the identifier of the service, an identifier of the i^{th} type of data packet, and the bit rate of the service, into an i^{th} PCC rule, to obtain the N PCC rules in total. The PCF may determine, based on the first sharing identifier in the QoS requirement, that the N types of data packets need to share the bit rate of the service, or the PCF may determine that the N types of data packets need to share the bit rate of the service. In this way, the PCF may add the second sharing identifier to each of the N PCC rules.

It may be understood that the second sharing identifier is an example name, or may be replaced with any possible name, for example, second sharing information or a second sharing indication. This is not limited.

It may be further understood that, that the N types of data packets correspond to the N PCC rules is an example implementation. For example, the N types of data packets may correspond to one PCC rule. The PCC rule may include the following information: the identifier of the service, identifiers of the N types of data packets, the bit rate of the service, and the second sharing identifier. The information may be combined to indicate the N types of data packets to share the bit rate of the service.

In addition, for the M-N of the M PCC rules, the PCF may perform processing according to existing logic. Details are not described. That the PCF configures the N PCC rules is specifically described in the following.

S705: The PCF sends a policy control update notification request (Npcf_SMPolicyControl _UpdateNotify Request) message to the SMF. The SMF receives the policy control update notification request message from the PCF.

The policy control update notification request message may include a PCC rule, for example, the foregoing N PCC rules.

S706: The SMF maps the PCC rule to a QoS flow.

The SMF may obtain the N PCC rules from the policy control update notification request message, and map the N PCC rules to the at least two QoS flows. For example, a quantity of the at least two QoS flows is N, and the N PCC rules may be mapped to the N QoS flows in one-to-one correspondence. For another example, a quantity of the at least two QoS flows is less than N. In this case, mapping between some PCC rules and QoS flows may be in one-to-one correspondence, for example, two PCC rules are mapped to two QoS flows in one-to-one correspondence. Mapping between some other PCC rules and a QoS flow may be in many-to-one correspondence, for example, two PCC rules are mapped to one QoS flow.

It may be understood that if the N types of data packets correspond to one PCC rule, the SMF may map the PCC rule to the N QoS flows. For example, the SMF may map the PCC rule to the N QoS flows based on the identifiers of the N types of data packets included in the PCC rule.

It may be further understood that for specific implementation of mapping the PCC rule to the QoS flow, refer to related descriptions in the foregoing "3. Mapping mechanism". Details are not described again.

S707: The SMF sends an N4 message to the UPF.

The N4 message may be used to configure the UPF, for example, include first configuration information, to indicate the at least two QoS flows to share the bit rate of the service. The first configuration information may include at least one of the following: a data packet rule and a QoS rule associated with the data packet rule. The data packet rule may be a PDR or any other possible implementation. This is not limited. The QoS rule may be a QER or any other possible implementation. This is not limited.

### Case 1:

The data packet rule may indicate that the data flows of the service are mapped to the at least two QoS flows, for example, the N types of data packets are mapped to the at least two QoS flows, and the at least two QoS flows share the bit rate of the service. The QoS rule may indicate the bit rate of the service.

In a possible implementation, the N types of data packets may correspond to N data packet rules, i is any integer from 1 to N, and an i^{th} data packet rule corresponding to an i^{th} type of data packet may include at least one of the following: the identifier of the service, an i^{th} correspondence, and a QoS flow list. The i^{th} correspondence may be a correspondence between an identifier of the i^{th} type of data packet, an identifier of a QoS flow corresponding to the i^{th} type of data packet, and an identifier of a QoS rule of the QoS flow, and indicates that the i^{th} type of data packet needs to be mapped to the QoS flow corresponding to the data packet, and the QoS flow is performed according to the QoS rule of the QoS flow. The QoS flow list may indicate QoS flows in the QoS flow list to share the bit rate of the service. For example, the QoS flow list includes identifiers of QoS flows that share the bit rate of the service. The at least two QoS flows belong to the QoS flow list, in other words, the QoS flow list includes identifiers of the at least two QoS flows, to indicate the at least two QoS flows to share the bit rate of the service.

The at least two QoS flows may correspond to at least two QoS rules, and a QoS rule of each QoS flow may include a bit rate of the QoS flow, for example, a GFBR and an MFBR. It may be understood that because the at least two QoS flows share the bit rate of the service, the bit rate of each QoS flow may also be understood as the bit rate of the service.

For ease of understanding, the XR service is continued to be used as an example.

The type I data packet corresponds to a data packet rule 1, the type P data packet corresponds to a data packet rule 2, and the audio data packet corresponds to a data packet rule 3. The data packet rule 1 includes an IP 5-tuple, a correspondence 1, and the QoS flow list. The data packet rule 2 includes an IP 5-tuple, a correspondence 2, and the QoS flow list. The data packet rule 3 includes an IP 5-tuple and a correspondence 3. The correspondence 1 may be shown in Table 1, the QoS flow list may be shown in Table 2, the correspondence 2 may be shown in Table 3, and the correspondence 3 may be shown in Table 4.

**Table 1**

| Identifier of a type of a data packet | Identifier of a QoS flow | Identifier of a QoS rule |
|---|---|---|
| Identifier of a type I data packet | QoS flow 1 | QoS rule 1 |

**Table 2**

| Identifier of a QoS flow | Descriptions |
|---|---|
| QoS flow 1 | Share a bit rate of a service |
| QoS flow 2 | |

**Table 3**

| Identifier of a type of a data packet | Identifier of a QoS flow | Identifier of a QoS rule |
|---|---|---|
| Identifier of a type P data packet | QoS flow 2 | QoS rule 2 |

**Table 4**

| Identifier of a type of a data packet | Identifier of a QoS flow | Identifier of a QoS rule |
|---|---|---|
| Identifier of an audio data packet | QoS flow 3 | QoS rule 3 |

As shown in Table 1, the correspondence 1 may indicate that the type I data packet needs to be mapped to the QoS flow 1, and the QoS flow 1 may be performed according to the QoS rule 1. As shown in Table 2, the QoS flow list may indicate the QoS flow 1 and the QoS flow 2 to share the bit rate of the service. As shown in Table 3, the correspondence 2 may indicate that the type P data packet needs to be mapped to the QoS flow 2, and the QoS flow 2 may be performed according to the QoS rule 2. As shown in Table 4, the correspondence 3 may indicate that the audio data packet needs to be mapped to the QoS flow 3, and the QoS flow 3 may be performed according to the QoS rule 3.

The QoS rule 1 may include the QoS flow 1, the GFBR of 10 Mbps, and the MFBR of 12 Mbps. The QoS rule 2 may include the QoS flow 2, the GFBR of 10 Mbps, and the MFBR of 12 Mbps. In other words, a bit rate of the XR service is the GFBR of 10 Mbps and the MFBR of 12 Mbps. The QoS rule 3 may include the QoS flow 3, the GFBR of 8 Mbps, and the MFBR of 8 Mbps.

In another possible implementation, the N types of data packets may correspond to a same data packet rule, and the data packet rule may include the identifier of the service and a correspondence. The correspondence may include a correspondence between the identifiers of the N types of data packets and identifiers of the at least two QoS flows, and one-to-one correspondence between the identifiers of the at least two QoS flows and identifiers of at least two QoS rules. In this case, the identifiers of the at least two QoS flows in the correspondence may be understood as a QoS flow list, to indicate the at least two QoS flows to share the bit rate of the service.

The at least two QoS rules may indicate bit rates of the at least two QoS flows. For specific implementation, refer to the foregoing related descriptions. Details are not described again.

For ease of understanding, the XR service is continued to be used as an example.

The type I data packet and the type P data packet correspond to a data packet rule 4. The data packet rule 4 includes an IP 5-tuple and a correspondence 4. The correspondence 4 may be shown in Table 5.

**Table 5**

| Identifier of a type of a data packet | Identifier of a QoS flow | Identifier of a QoS rule |
|---|---|---|
| Identifier of a type I data packet | QoS flow 1 | QoS rule 1 |
| Identifier of a type P data packet | QoS flow 2 | QoS rule 2 |

As shown in Table 4, the correspondence 4 may indicate that the type I data packet needs to be mapped to the QoS flow 1, the QoS flow 1 may be performed according to the QoS rule 1, the type P data packet needs to be mapped to the QoS flow 2, and the QoS flow 2 may be performed according to the QoS rule 2. In addition, the QoS flow 1 and the QoS flow 2 in the correspondence 3 may form a QoS flow list, to indicate the QoS flow 1 and the QoS flow 2 to share the bit rate of the service.

The data packet rule 1 corresponds to the QoS rule 1, and the data packet rule 2 corresponds to the QoS rule 2. For the QoS rule 1 and the QoS rule 2, refer to the foregoing related descriptions. Details are not described again.

### Case 2:

The data packet rule may indicate that the data flows of the service are mapped to the at least two QoS flows, for example, the N types of data packets are mapped to the at least two QoS flows. The QoS rule may indicate the bit rate of the service, and the at least two QoS flows share the bit rate of the service.

In a possible implementation, the N types of data packets may correspond to N data packet rules, i is any integer from 1 to N, and an i^{th} data packet rule corresponding to an i^{th} type of data packet may include at least one of the following: the identifier of the service and an i^{th} correspondence. The i^{th} correspondence may be a correspondence between an identifier of the i^{th} type of data packet, an identifier of a QoS flow corresponding to the i^{th} type of data packet, and an identifier of a QoS rule of the QoS flow, and indicates that the i^{th} type of data packet needs to be mapped to an i^{th} QoS flow, and the i^{th} QoS flow may be performed according to a QoS rule of the i^{th} QoS flow.

The at least two QoS flows may correspond to at least two QoS rules, and a QoS rule associated with each QoS flow may include a bit rate of the QoS flow, for example, a GFBR and an MFBR. It may be understood that because the at least two QoS flows share the bit rate of the service, the bit rate of each QoS flow may also be understood as the bit rate of the service. In addition, the at least two QoS flows may correspond to one group (group) QoS rule. The group QoS rule may indicate to share the bit rate of the service. For example, the group QoS rule includes information indicating to share the bit rate of the service, for example, a third sharing identifier. In this case, the group QoS rule may further indicate, based on a correspondence between the group QoS rule and the at least two QoS flows, the at least two QoS flows to share the bit rate of the service.

For ease of understanding, the XR service is continued to be used as an example.

The type I data packet corresponds to a data packet rule 1, the type P data packet corresponds to a data packet rule 2, and the audio data packet corresponds to a data packet rule 3. The data packet rule 1 includes an IP 5-tuple and a correspondence 5. The data packet rule 2 may include an IP 5-tuple and a correspondence 6. The data packet rule 3 includes an IP 5-tuple and a correspondence 7. The correspondence 5 may be shown in Table 6, the correspondence 6 may be shown in Table 7, and the correspondence 7 may be shown in Table 8.

**Table 6**

| Identifier of a type of a data packet | Identifier of a QoS flow | Identifier of a QoS rule |
|---|---|---|
| Identifier of a type I data packet | QoS flow 1 | QoS rule 1 |
| | | QoS rule 3 |

**Table 7**

| Identifier of a type of a data packet | Identifier of a QoS flow | Identifier of a QoS rule |
|---|---|---|
| Identifier of a type P data packet | QoS flow 2 | QoS rule 2 |
| | | QoS rule 3 |

**Table 8**

| Identifier of a type of a data packet | Identifier of a QoS flow | Identifier of a QoS rule |
|---|---|---|
| Identifier of an audio data packet | QoS flow 3 | QoS rule 4 |

As shown in Table 6, the correspondence 5 may indicate that the type I data packet needs to be mapped to the QoS flow 1, and the QoS flow 1 may be performed according to the QoS rule 1 and the QoS rule 3. As shown in Table 7, the correspondence 6 may indicate that the type P data packet needs to be mapped to the QoS flow 2, and the QoS flow 2 may be performed according to the QoS rule 2 and the QoS rule 3. As shown in Table 8, the correspondence 7 may indicate that the audio data packet needs to be mapped to the QoS flow 3, and the QoS flow 3 may be performed according to the QoS rule 4.

The QoS rule 1 may include the QoS flow 1, the GFBR of 10 Mbps, and the MFBR of 12 Mbps. The QoS rule 2 may include the QoS flow 2, the GFBR of 10 Mbps, and the MFBR of 12 Mbps. The QoS rule 3 may include the GFBR of 10 Mbps and the MFBR of 12 Mbps. When the QoS rule 3 is associated with the QoS flow 1 and the QoS flow 2, the QoS rule 3 may indicate the QoS flow 1 and the QoS flow 2 to share the bit rate of the service, and the bit rate of the service is the GFBR of 10 Mbps and the MFBR of 12 Mbps.

It may be understood that the group QoS rule may also be referred to as a QoS rule, a QoS group rule, or any other possible name. This is not limited. In addition, the third sharing identifier is an example name, or may be replaced with any possible name, for example, third sharing information or a third sharing indication. This is not limited.

In another possible implementation, the N types of data packets may correspond to N data packet rules, i is an integer from 1 to N, i is any integer from 1 to N, and an i^{th} data packet rule corresponding to an i^{th} type of data packet may include at least one of the following: the identifier of the service and an i^{th} correspondence. The i^{th} correspondence may be a correspondence between an identifier of the i^{th} type of data packet, an identifier of a QoS flow corresponding to the i^{th} type of data packet, and an identifier of a QoS rule of the QoS flow, and indicates that the i^{th} type of data packet needs to be mapped to an i^{th} QoS flow, and the i^{th} QoS flow may be performed according to a QoS rule of the i^{th} QoS flow.

The at least two QoS flows may correspond to at least two QoS rules, and a QoS rule associated with each QoS flow may include a bit rate of the QoS flow and information indicating the QoS flow to share the bit rate of the service, for example, a fourth sharing identifier. In this case, the at least two QoS rules may be combined to indicate the at least two QoS flows to share the bit rate of the service.

For ease of understanding, the XR service is continued to be used as an example.

The type I data packet corresponds to a data packet rule 1, and the type P data packet corresponds to a data packet rule 2. The data packet rule 1 includes an IP 5-tuple and a correspondence 1. Details are shown in Table 1 and are not described again. The data packet rule 2 includes an IP 5-tuple and a correspondence 2. Details are shown in Table 3 and are not described again. The QoS rule 1 may include the QoS flow 1, the fourth sharing identifier, the GFBR of 10 Mbps, and the MFBR of 12 Mbps, to indicate the QoS flow 1 to share the bit rate of the service. The QoS rule 2 may include the QoS flow 2, the fourth sharing identifier, the GFBR of 10 Mbps, and the MFBR of 12 Mbps, to indicate the QoS flow 2 to share the bit rate of the service. In this case, the QoS rule 1 and the QoS rule 2 may be combined to indicate the QoS flow 1 and the QoS flow 2 to share the bit rate of the service.

It may be understood that the fourth sharing identifier is an example name, or may be replaced with any possible name, for example, fourth sharing information or a fourth sharing indication. This is not limited.

It may be further understood that, that the QoS rule of each QoS flow indicates the QoS flow to share the service is an example. This is not limited. For example, indication may alternatively be performed based on a case that N data packet rules correspond to the N types of data packets. In this case, a data packet rule of each type of data packet may include the information indicating the QoS flow to share the bit rate of the service. In addition, for specific implementation of the data packet rule and the QoS rule, refer to related descriptions in the foregoing "2. QoS". Details are not described again.

S708: The SMF sends an N1N2 transfer (Namf_Communication_N1N2MessageTransfer) message to an AMF. The AMF receives the N1N2 transfer message from the SMF.

The N1N2 transfer message may be used to configure the RAN, for example, include second configuration information, to indicate the at least two QoS flows to share the bit rate of the service.

### Case A:

The second configuration information may include a same QoS profile associated with the at least two QoS flows. The QoS profile may include at least one of the following: the identifiers of the at least two QoS flows, bit rates of the at least two QoS flows, and the QoS flow list. The QoS flow list may indicate the at least two QoS flows to share the bit rate of the service. For specific implementation, refer to the foregoing related descriptions. Details are not described again.

For ease of understanding, the XR service is continued to be used as an example.

The QoS flow 1 and the QoS flow 2 correspond to a QoS profile 1. The QoS profile 1 includes an identifier of the QoS flow 1, an identifier of the QoS flow 2, a bit rate of the QoS flow 1, a bit rate of the QoS flow 2, and the QoS flow list. The bit rate of the QoS flow 1 and the bit rate of the QoS flow 2 may include a GFBR of 10 Mbps and an MFBR of 12 Mbps. For the QoS flow list, refer to the foregoing related descriptions. Details are not described again.

### Case B:

The second configuration information may include at least two QoS profiles associated with the at least two QoS flows.

In a possible implementation, a QoS profile associated with each QoS flow may indicate the at least two QoS flows to share the bit rate of the service. For example, the QoS profile associated with each QoS flow may include at least one of the following: the bit rate of the QoS flow and the QoS flow list. The QoS flow list may indicate the at least two QoS flows to share the bit rate of the service. For specific implementation, refer to the foregoing related descriptions. Details are not described again. For specific implementation of the bit rate of each QoS flow, refer to the foregoing related descriptions. Details are not described again.

For ease of understanding, the XR service is continued to be used as an example.

The QoS flow 1 corresponds to a QoS profile 2, and the QoS flow 2 corresponds to a QoS profile 3. The QoS profile 2 includes an identifier of the QoS flow 1, a bit rate of the QoS flow 1, and the QoS flow list. The QoS profile 3 includes an identifier of the QoS flow 2, a bit rate of the QoS flow 2, and the QoS flow list. For the bit rate of the QoS flow 1, the bit rate of the QoS flow 2, and the QoS flow list, refer to the foregoing related descriptions. Details are not described again.

In another possible implementation, a QoS profile of each QoS flow may include at least one of the following: an identifier of the QoS flow, the bit rate of the QoS flow, and information indicating the QoS flow to share the bit rate of the service, for example, a fifth sharing identifier. In this case, the at least two QoS profiles may be combined to indicate the at least two QoS flows to share the bit rate of the service.

For ease of understanding, the XR service is continued to be used as an example.

The QoS flow 1 corresponds to a QoS profile 2, the QoS flow 2 corresponds to a QoS profile 3, and the QoS flow 3 corresponds to a QoS profile 4. The QoS profile 2 includes an identifier of the QoS flow 1, a bit rate of the QoS flow 1, and the fifth sharing identifier, to indicate the QoS flow 1 to share the bit rate of the service. The QoS profile 3 includes an identifier of the QoS flow 2, a bit rate of the QoS flow 2, and the fifth sharing identifier, to indicate the QoS flow 2 to share the bit rate of the service. The QoS profile 4 includes an identifier of the QoS flow 3 and a bit rate of the QoS flow 3. The QoS profile 4 does not carry the sharing identifier, to indicate the QoS flow 3 not to share the bit rate of the service. In this case, the QoS profile 2 and the QoS profile 3 may be combined to indicate the QoS flow 1 and the QoS flow 2 to share the bit rate of the service. In addition, for the bit rate of the QoS flow 1 and the bit rate of the QoS flow 2, refer to the foregoing related descriptions. Details are not described again.

It may be understood that the fifth sharing identifier is an example name, or may be replaced with any possible name, for example, fifth sharing information or a fifth sharing indication. This is not limited.

It may be further understood that for specific implementation of the QoS profile, refer to related descriptions in "2. QoS". Details are not described again.

S709: The AMF sends an N2 session request (N2 PDU Session Request) message to the RAN. The RAN receives the N2 session request message from the AMF.

The N1N2 transfer message may be used to configure the RAN, for example, include the second configuration information.

S710: The UPF transmits the data flows of the service based on the first configuration information.

The UPF may determine, based on the first configuration information, that the at least two QoS flows share the bit rate of the service, to send the data flow of the service based on the at least two QoS flows sharing the bit rate of the service. A sum of bit rates for transmitting the data flows of the service in the at least two QoS flows at a moment may match the bit rate of the service. For example, the sum of the bit rates for transmitting the data flows of the service in the at least two QoS flows is less than or equal to the GFBR of the service; or the sum of the bit rates for transmitting the data flows of the service in the at least two QoS flows is greater than the GFBR of the service, and the sum of the bit rates for transmitting the data flows of the service in the at least two QoS flows is less than or equal to the MFBR of the service.

Two QoS flows are used as an example. After the UPF receives a first data packet from the AF, the UPF may match the first data packet with the foregoing data packet rule, for example, match an identifier of a service in the first data packet with the identifier of the service in the data packet rule. If the first data packet does not match any data packet rule, the UPF discards the first data packet. If the first data packet matches a data packet rule, the UPF may map, based on an identifier that is of a type of the data packet and that is carried in the first data packet, for example, an identifier of a type I data packet or an identifier of a type P data packet carried in a header of the first data packet, the first data packet to a first QoS flow that corresponds to the type of the data packet and that is in the two QoS flows, and send the first data packet to the RAN according to a QoS rule that corresponds to the first QoS flow and that is in the foregoing different QoS rules. Similarly, after receiving a second data packet from the AF, the UPF may also perform processing similar to that of the foregoing first data packet, map the second data packet to a second QoS flow that corresponds to a type of the data packet and that is in the two QoS flows, and send the second data packet to the RAN according to a QoS rule that corresponds to the second QoS flow and that is in the foregoing different QoS rules.

If the first data packet and the second data packet need to be sent in a time-division manner, when the first data packet is sent, the second QoS flow is usually in an idle state. In other words, a bit rate needed by the second QoS flow in this case may be 0, and the first QoS flow may exclusively use the bit rate that is of the service and that is shared by the first QoS flow and the second QoS flow. For example, if a bit rate for receiving the first data packet by the UPF from the AF is less than or equal to the GFBR of the service, the UPF may send the first data packet based on the GFBR of the service. If a bit rate for receiving the first data packet by the UPF from the AF is greater than the GFBR of the service and is less than or equal to the MFBR of the service, the UPF may send the first data packet based on the bit rate of the first data packet. If a bit rate for receiving the first data packet by the UPF from the AF is greater than the MFBR of the service, the UPF may discard the first data packet. It may be understood that, in this case, sending the second data packet by the UPF is similar to sending the first data packet by the UPF. For understanding of sending the second data packet by the UPF, refer to sending the first data packet by the UPF. Details are not described again.

For ease of understanding, the XR service is continued to be used as an example.

The UPF determines that a data packet 1 from the AF is mapped to the QoS flow 1, and a data packet 2 from the AF is mapped to the QoS flow 2. The data packet 1 needs to be sent at a moment t1, and the data packet 2 needs to be sent at a moment t2. If a bit rate of the data packet 1 is 8 Mbps, at the moment t1, the UPF may send the data packet 1 to the RAN over the QoS flow 1 at 8 Mbps. Alternatively, if a bit rate of the data packet 1 is 11 Mbps, at the moment t1, the UPF may send the data packet 1 to the RAN over the QoS flow 1 at 11 Mbps. Alternatively, if a bit rate of the data packet 1 is 13 Mbps, the UPF may discard the data packet 1. It may be understood that sending the data packet 2 by the UPF is similar to sending the data packet 1 by the UPF. For understanding of sending the data packet 2 by the UPF, refer to sending the data packet 1 by the UPF. Details are not described again.

If the first data packet and the second data packet need to be sent at the same time, the first QoS flow and the second QoS flow need to share the bit rate of the service. For example, if a sum of the bit rate for receiving the first data packet by the UPF from the AF and a bit rate for receiving the second data packet by the UPF from the AF (denoted as a sum of the bit rate of the first data packet and a bit rate of the second data packet) is less than or equal to the GFBR of the service, the UPF may send the first data packet and the second data packet based on the GFBR of the service. If a sum of the bit rate of the first data packet and a bit rate of the second data packet is greater than the GFBR of the service and is less than or equal to the MFBR of the service, the UPF may send the first data packet and the second data packet based on the sum of the bit rate of the first data packet and the bit rate of the second data packet. If a sum of the bit rate of the first data packet and a bit rate of the second data packet is greater than the MFBR of the service, the UPF may discard the first data packet and/or the second data packet. For example, the first data packet is a type I data packet, and the second data packet is a type P data packet. The UPF may discard the type P data packet, to ensure that the type I data packet can be successfully sent.

For ease of understanding, the XR service is continued to be used as an example.

The UPF determines that a data packet 1 from the AF is mapped to the QoS flow 1, a data packet 2 from the AF is mapped to the QoS flow 2, and a data packet 3 from the AF is mapped to the QoS flow 3. The data packet 1, the data packet 2, and the data packet 3 all need to be sent at a moment t1. If a bit rate of the data packet 1 is 4 Mbps, a bit rate of the data packet 2 is 4 Mbps, and a bit rate of the data packet 3 is 8 Mbps, at the moment t1, at 8 Mbps, the UPF may send the data packet 1 to the RAN over the QoS flow 1 and send the data packet 2 to the RAN over the QoS flow 2, and the UPF may send the data packet 3 to the RAN over the QoS flow 3 at 8 Mbps. Alternatively, if a bit rate of the data packet 1 is 6 Mbps, a bit rate of the data packet 2 is 5 Mbps, and a bit rate of the data packet 3 is 8 Mbps, at the moment t1, at 11 Mbps, the UPF may send the data packet 1 to the RAN over the QoS flow 1 and send the data packet 2 to the RAN over the QoS flow 2, and the UPF may send the data packet 3 to the RAN over the QoS flow 3 at 8 Mbps. Alternatively, if a bit rate of the data packet 1 is 8 Mbps, a bit rate of the data packet 2 is 6 Mbps, and a bit rate of the data packet 3 is 8 Mbps, the UPF may discard the data packet 1 or the data packet 2, and the UPF may send the data packet 3 to the RAN over the QoS flow 3 at 8 Mbps.

S711: The RAN transmits the data flows of the service based on the second configuration information.

The RAN may determine, based on the second configuration information, that the at least two QoS flows share the bit rate of the service, to send the data flow of the service based on the at least two QoS flows sharing the bit rate of the service. A sum of bit rates for transmitting the data flows of the service in the at least two QoS flows at a moment may match the bit rate of the service. For example, the sum of the bit rates for transmitting the data flows of the service in the at least two QoS flows is less than or equal to the GFBR of the service; or the sum of the bit rates for transmitting the data flows of the service in the at least two QoS flows is greater than the GFBR of the service, and the sum of the bit rates for transmitting the data flows of the service in the at least two QoS flows is less than or equal to the MFBR of the service.

Two QoS flows are used as an example. After receiving the first data packet from the UPF over the first QoS flow, the RAN may send the first data packet to a UE based on a QoS profile corresponding to the first QoS flow. Similarly, after receiving the second data packet from the UPF over the second QoS flow, the RAN may send the second data packet to the UE based on a QoS profile corresponding to the second QoS flow. The RAN may map the first data packet to a first DRB corresponding to the first QoS flow, map the second data packet to a second DRB corresponding to the second QoS flow, and send the first data packet and the second data packet to the UE in a manner in which the first DRB and the second DRB share the bit rate of the service. A specific implementation principle is similar to that of sending the first data packet and the second data packet by the UPF. For understanding of the specific implementation principle, refer to sending the first data packet and the second data packet by the UPF.

### Scenario 2:

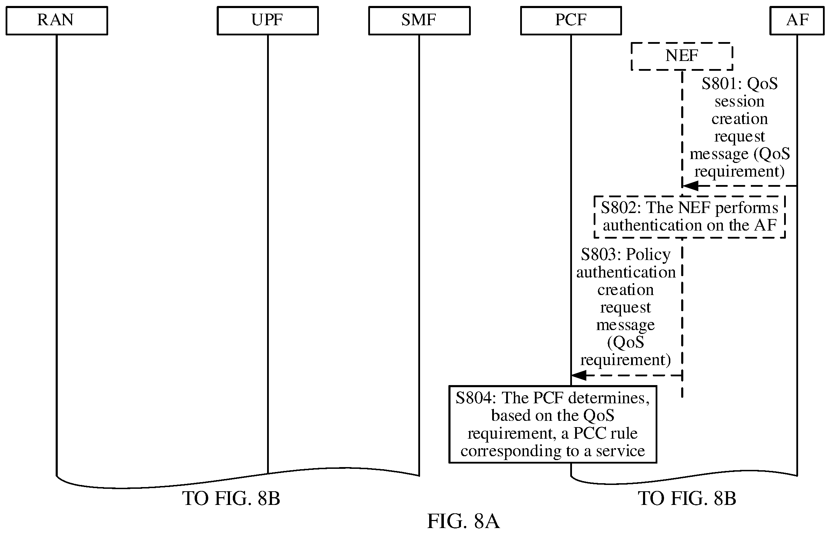

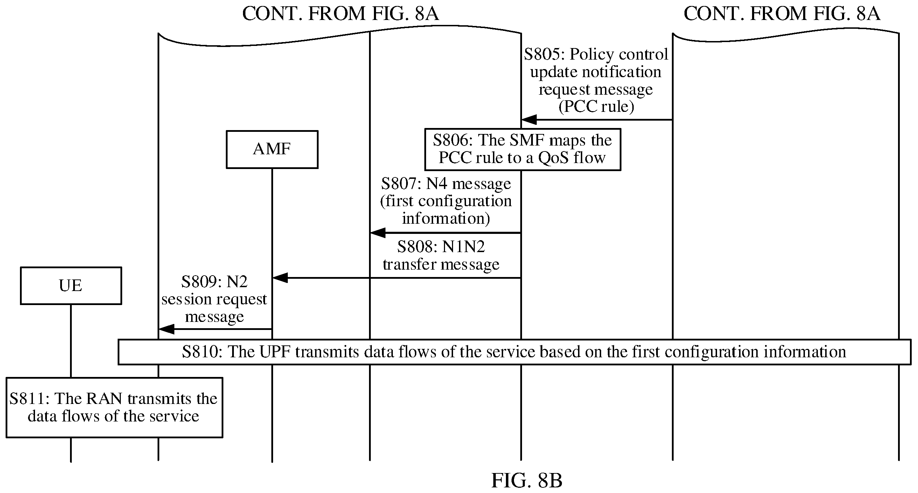

FIG. 8A and FIG. 8B are a second schematic flowchart of a communication method according to an embodiment of this application. The communication method is applicable to the foregoing communication system, and relates to interaction among an AF, a PCF, an SMF, a UPF, and a RAN. In the scenario 2, the PCF may provide a PCC rule for the SMF based on a QoS requirement of a service provided by the AF, to indicate that at least two QoS flows used to carry data flows of the service need to share a bit rate of the service. In this way, the SMF may configure the RAN, so that the RAN can transmit the data flows of the service in a manner of sharing the bit rate of the service.

Specifically, as shown in FIG. 8A and FIG. 8B, a procedure of the communication method is shown as follows.

S801: The AF sends a QoS session creation request message to a NEF. The NEF receives the AF QoS session creation request message from the AF.

S802: The NEF performs authentication on the AF.

S803: The NEF sends a policy authentication creation request message to the PCF. The PCF receives the policy authentication creation request message from the NEF.

S804: The PCF determines, based on the QoS requirement, a PCC rule corresponding to the service.

S805: The PCF sends a policy control update notification request message to the SMF. The SMF receives the policy control update notification request message from the PCF.

S806: The SMF maps the PCC rule to a QoS flow.

S807: The SMF sends an N4 message to the UPF.

For specific implementation principles of S801 to S807, refer to related descriptions in S701 to S707. Details are not described again.

S808: The SMF sends an N1N2 transfer message to an AMF. The AMF receives the N1N2 transfer message from the SMF.

The N1N2 transfer message message may be used to configure the RAN, for example, indicate the RAN not to perform bit rate control on the at least two QoS flows. In other words, when the UPF has ensured the bit rate of the service, the RAN may not perform the bit rate control, to reduce overheads of the RAN and improve running efficiency.

The at least two QoS flows may be QoS flows to which N types of data packets of the service are respectively mapped. The N1N2 transfer message may include a QoS profile of each of the at least two QoS flows. The QoS profile associated with each QoS flow may not include a bit rate of the service, for example, a GFBR and an MFBR. In this case, the QoS profile associated with each QoS flow does not include a bit rate of the service, to indicate the RAN not to perform bit rate control on the QoS flow. In this way, signaling overheads can be reduced, and communication efficiency can be improved. Alternatively, the QoS profile associated with each QoS flow may include second indication information, and the second indication information may indicate the RAN not to perform bit rate control on a QoS flow corresponding to the QoS profile including the second indication information. In other words, an additional information element may be introduced to indicate to skip performing bit rate control, to avoid adjusting an existing information element. In this way, the implementation difficulty can be reduced.

It may be understood that the second indication information is an example name, or may be replaced with any possible name, for example, a second indication or a second identifier. This is not limited.

S809: The AMF sends an N2 session request message to the RAN. The RAN receives the N2 session request message from the AMF.

The N1N2 transfer message may be used to configure the RAN, for example, indicate the RAN not to perform bit rate control on different QoS flows. The N1N2 transfer message may specifically include an information element in the foregoing N1N2 transfer message. For understanding of the N1N2 transfer message, refer to the information element in the foregoing N1N2 transfer message. Details are not described again.

S810: The UPF transmits the data flows of the service based on first configuration information.

The UPF may determine, based on the first configuration information, that the at least two QoS flows share the bit rate of the service, to send the data flow of the service based on the at least two QoS flows sharing the bit rate of the service. For details, refer to related descriptions in S710. Details are not described again.

Optionally, if a bit rate for receiving a data flow of the service by the UPF is less than or equal to the GFBR of the service, the UPF includes a first mark in the data flow of the service, for example, includes the first mark in a header of a data packet included in the data flow. The first mark indicates the RAN to transmit the data flow of the service based on the bit rate of the data flow of the service, to ensure that transmitting the data flow of the service can meet a requirement of the service. Alternatively, if a bit rate for receiving a data flow of the service by the UPF is greater than the GFBR of the service, the UPF includes a second mark in the data flow of the service, for example, includes the second mark in a header of a data packet included in the data flow. The second mark indicates the RAN to transmit the data flow of the service based on processing logic of the RAN, for example, based on a local resource configuration status of the RAN. In other words, a data packet is marked, so that the RAN can perform rate control only on a data flow with a relatively low rate (less than or equal to the GFBR of the service). In this way, overheads of the RAN can be considered while a specific rate is guaranteed.

It may be understood that the foregoing manner of marking a data flow is usually applicable to a case in which the GFBR of the service is configured for the RAN. If the GFBR of the service is not configured for the RAN, when the data flow of the service carries the first mark, the RAN may still transmit the data flow of the service based on the processing logic of the RAN. In addition, the first mark and the second mark are example names, or may be replaced with any possible name, such as a first color mark and a second color mark. This is not limited.

It may be further understood that the foregoing manner of marking the data flow is merely some examples. This is not limited. For example, the UPF may alternatively include the first mark in only a data flow that is of the service and whose bit rate is less than or equal to the GFBR of the service, or the UPF may include the second mark in only a data flow that is of the service and whose bit rate is less than or equal to the GFBR of the service. This is not limited.

S811: The RAN transmits the data flows of the service.

When the RAN does not perform bit rate control on the data flow of the service, the RAN may process the data flow of the service based on the processing logic of the RAN. For example, if the local resource configuration of the RAN can satisfy the bit rate of the data flow of the service, the RAN may send the data flow of the service to a UE based on the bit rate of the data flow of the service; or if the local resource configuration of the RAN cannot satisfy the bit rate of the data flow of the service, the RAN may discard at least some data packets in the data flow of the service.

Optionally, when the UPF marks the data flow of the service, if the RAN determines that the data flow of the service carries the first mark, the RAN may send the data flow of the service to the UE based on the GFBR of the service; and/or if the RAN determines that the data flow of the service carries the second mark, the RAN may process the data flow of the service based on the processing logic of the RAN.

It may be understood that, for a related principle of transmitting the data flow of the service by the RAN, refer to related descriptions in S711. Details are not described again.

### Scenario 3:

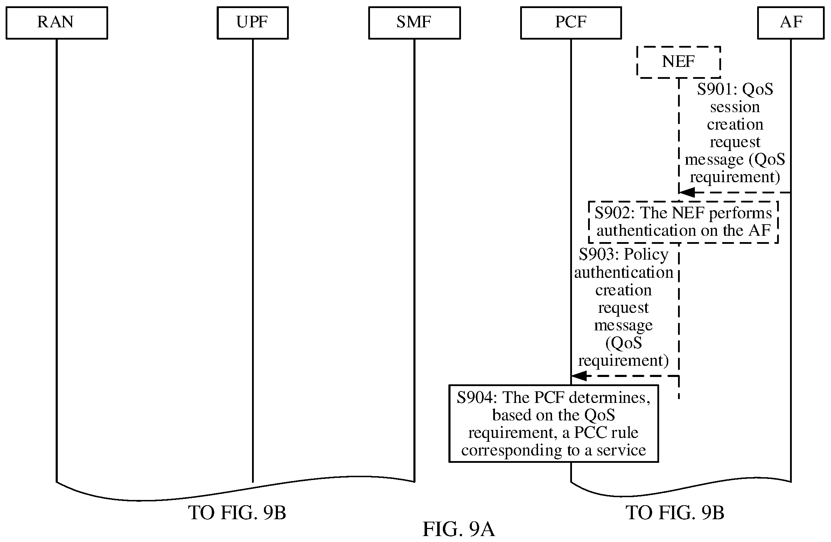

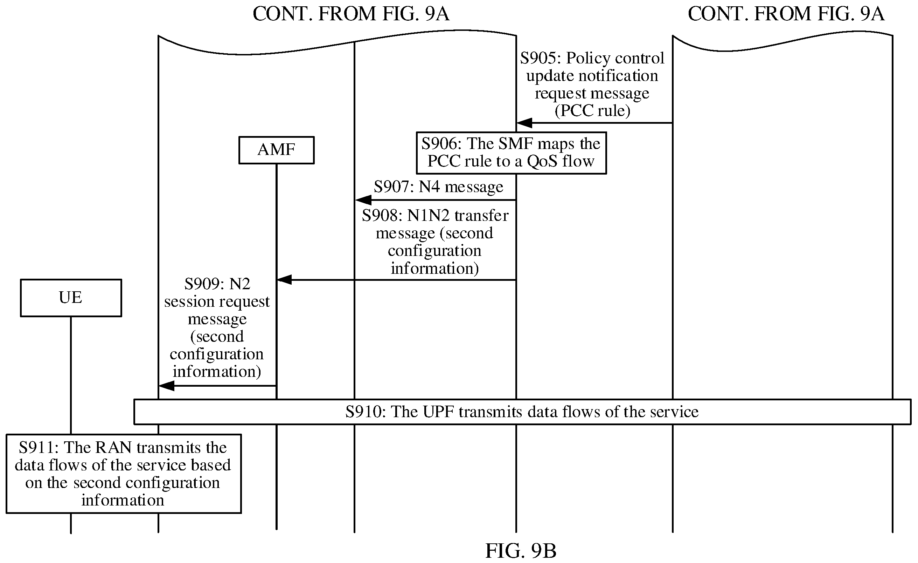

FIG. 9A and FIG. 9B are a third schematic flowchart of a communication method according to an embodiment of this application. The communication method is applicable to the foregoing communication system, and relates to interaction among an AF, a PCF, an SMF, a UPF, and a RAN. In the scenario 3, the PCF may provide a PCC rule for the SMF based on a QoS requirement of a service provided by the AF, to indicate that at least two QoS flows used to carry data flows of the service need to share a bit rate of the service. In this way, the SMF may configure the UPF, so that the UPF can transmit the data flows of the service in a manner of sharing the bit rate of the service.

Specifically, as shown in FIG. 9A and FIG. 9B, a procedure of the communication method is shown as follows.

S901: The AF sends a QoS session creation request message to a NEF. The NEF receives the AF QoS session creation request message from the AF.

S902: The NEF performs authentication on the AF.

S903: The NEF sends a policy authentication creation request message to the PCF. The PCF receives the policy authentication creation request message from the NEF.

S904: The PCF determines, based on the QoS requirement, a PCC rule corresponding to the service.

S905: The PCF sends a policy control update notification request message to the SMF. The SMF receives the policy control update notification request message from the PCF.

S906: The SMF maps the PCC rule to a QoS flow.

For specific implementation principles of S901 to S905, refer to related descriptions in S701 to S705. Details are not described again.

S907: The SMF sends an N4 message to the UPF.

The N4 message may be used to configure the UPF, for example, indicate the UPF not to perform bit rate control on the at least two QoS flows. In other words, when the RAN has ensured the bit rate of the service, the UPF may not perform the bit rate control, to reduce overheads of the UPF and improve running efficiency.

The at least two QoS flows may be QoS flows to which N types of data packets of the service are respectively mapped. The N4 message may include a QoS rule associated with each of the at least two QoS flows. The QoS rule associated with each QoS flow may not include a bit rate of the service, for example, a GFBR and an MFBR. In this case, the QoS rule associated with each QoS flow does not include a bit rate of the service, to indicate the UPF not to perform bit rate control on the QoS flow. In this way, signaling overheads can be reduced, and communication efficiency can be improved. Alternatively, the QoS rule associated with each QoS flow may include third indication information, and the third indication information may indicate the UPF not to perform bit rate control on a QoS flow corresponding to the QoS rule including the third indication information. In other words, an additional information element may be introduced to indicate to skip performing bit rate control, to avoid adjusting an existing information element. In this way, implementation difficulty can be reduced.

It may be understood that the third indication information is an example name, or may be replaced with any possible name, for example, a third indication or a third identifier. This is not limited.

S908: The SMF sends an N1N2 transfer message to an AMF. The AMF receives the N1N2 transfer message from the SMF.

S909: The AMF sends an N2 session request message to the RAN. The RAN receives the N2 session request message from the AMF.

For specific implementation principles of S908 and S909, refer to related descriptions in S708 and S709. Details are not described again.

S910: The UPF transmits the data flows of the service.

When the UPF does not perform bit rate control on the data flow of the service, the UPF may process the data flow of the service based on processing logic of the UPF. For example, if a local resource configuration of the UPF can satisfy a bit rate of the data flow of the service, the UPF may send the data flow of the service to the RAN based on the bit rate of the data flow of the service; or if a local resource configuration of the UPF cannot satisfy a bit rate of the data flow of the service, the UPF may discard at least some data packets in the data flow of the service.

It may be understood that, for a related principle of transmitting the data flow of the service by the UPF, refer to related descriptions in S710. Details are not described again.

S911: The RAN transmits the data flows of the service based on second configuration information.

For a specific implementation principle of S911, refer to related descriptions in S711. Details are not described again.

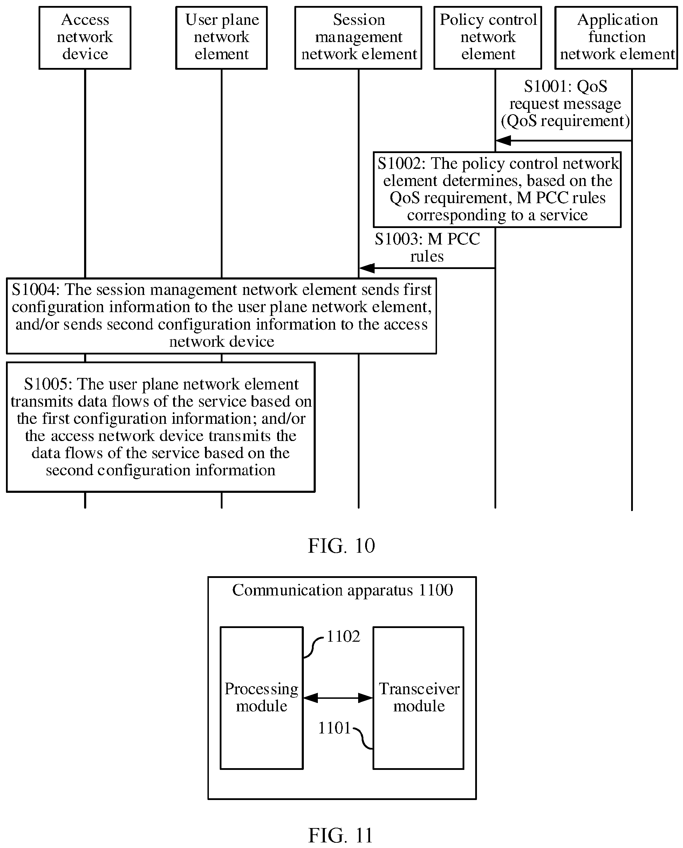

The foregoing describes, with reference to FIG. 7A and FIG. 7B to FIG. 9A and FIG. 9B, specific procedures of the communication methods provided in embodiments of this application in various scenarios. The following describes, with reference to FIG. 10, an overall procedure of a communication method provided in an embodiment of this application.

FIG. 10 is a fourth schematic flowchart of a communication method according to an embodiment of this application. The communication method is applicable to the foregoing communication system, and relates to interaction among an application function network element (AF), a policy control network element (PCF), a session management network element (SMF), a user plane network element (UPF), and an access network device (RAN).

Specifically, as shown in FIG. 10, a procedure of the communication method is shown as follows.

S1001: The policy control network element receives a QoS request message from the application function network element.

The QoS request message includes a QoS requirement of a service of the application function network element. The service may include an XR service or any other possible service. This is not limited.

It may be understood that, for a specific implementation principle of S1001, refer to related descriptions in S701 to S703. Details are not described again.

S1002: The policy control network element determines, based on the QoS requirement, M PCC rules corresponding to the service.

N of the M PCC rules include first indication information, the first indication information indicates data flows of the service corresponding to the PCC rules including the first indication information to share a bit rate of the service, the N PCC rules are mapped to at least two QoS flows used to carry the data flows of the service, M and N are integers greater than 1, and N is less than or equal to M. That the data flows of the service corresponding to the PCC rules including the first indication information share the bit rate of the service means that a sum of bit rates for transmitting the data flows of the service at a moment needs to match the bit rate of the service. For example, the bit rate of the service includes at least one of the following: a GFBR guaranteed flow bit rate or an MFBR maximum flow bit rate. That the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR. In this way, a transmission requirement of the service is met.

It may be understood that, for a specific implementation principle of S1002, refer to related descriptions in S704. Details are not described again.

S1003: The policy control network element sends the M PCC rules to the session management network element. The session management network element receives the M PCC rules from the policy control network element.

It may be understood that, for a specific implementation principle of S1003, refer to related descriptions in S705. Details are not described again.

S1004: The session management network element sends first configuration information to the user plane network element, and/or sends second configuration information to the access network device.

The first configuration information may be used for the at least two QoS flows to share the bit rate of the service.

The first configuration information includes a QoS flow list, the QoS flow list indicates QoS flows in the QoS flow list to share the bit rate of the service, and the QoS flows in the QoS flow list include the at least two QoS flows. All QoS flows that share the bit rate of the service may be quickly determined by using the QoS flow list, for example, by traversing the QoS flow list. Alternatively, the first configuration information includes one QoS rule associated with the at least two QoS flows, and the QoS rule indicates the at least two QoS flows to share the bit rate of the service. In other words, an additional QoS rule may be introduced to indicate to share the bit rate of the service, to avoid adjusting an existing QoS rule. In this way, implementation difficulty can be reduced. Alternatively, the first configuration information includes a QoS rule associated with each of the at least two QoS flows, and the QoS rule associated with each QoS flow indicates the QoS flow to share the bit rate of the service. In other words, an additional information element may be introduced into the QoS rule to indicate to share the bit rate of the service, to avoid adjusting an existing information element in the QoS rule. In this way, implementation difficulty can be reduced.

The second configuration information may also indicate the at least two QoS flows to share the bit rate of the service.

The second configuration information includes a QoS flow list, the QoS flow list indicates QoS flows in the QoS flow list to share the bit rate of the service, and the QoS flows in the QoS flow list include the at least two QoS flows. All QoS flows that share the bit rate of the service may be quickly determined by using the QoS flow list, for example, by traversing the QoS flow list. Alternatively, the second configuration information includes at least two QoS profiles associated with the at least two QoS flows, and the QoS profile associated with each of the at least two QoS flows indicates the QoS flow to share the bit rate of the service. In other words, an additional information element may be introduced into the QoS profile to indicate to share the bit rate of the service, to avoid adjusting an existing information element in the QoS profile. In this way, the implementation difficulty can be reduced.

The session management network element maps the N PCC rules to the at least two QoS flows, and determines the first configuration information and/or the second configuration information, to send the first configuration information to the user plane network element, and/or send the second configuration information to the access network device.

It may be understood that, for a specific implementation principle of S1004, refer to related descriptions in S706 to S709. Details are not described again.

S1005: The user plane network element transmits the data flows of the service based on the first configuration information; and/or the access network device transmits the data flows of the service based on the second configuration information.

The user plane network element may determine, based on the first configuration information, that the at least two QoS flows share the bit rate of the service, to send the data flow of the service based on the at least two QoS flows sharing the bit rate of the service; and/or the access network device may determine, based on the second configuration information, that the at least two QoS flows share the bit rate of the service, to send the data flow of the service based on the at least two QoS flows sharing the bit rate of the service.

A sum of bit rates for transmitting the data flows of the service in the at least two QoS flows at a moment matches the bit rate of the service. For example, the bit rate of the service includes at least one of the following: a GFBR or an MFBR. That the sum of the bit rates for transmitting the data flows of the service in the at least two QoS flows matches the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR. In this way, it is ensured that data flow transmission can meet a requirement of the service.

It may be understood that, for a specific implementation principle of S1005, refer to related descriptions in S710 and S711. Details are not described again.

In conclusion, because the policy control network element may configure data flows of the service to share the bit rate, after these data flows are mapped to the at least two QoS flows, the QoS flows may also share the bit rate of the service. In other words, a network may reserve only one shared resource for these QoS flows, instead of separately reserving one resource for each QoS flow. Therefore, communication efficiency is ensured without increasing communication overheads when a plurality of QoS flows are used to transmit data flows of a same service.

In a possible design solution, when the session management network element sends the first configuration information to the user plane network element, the session management network element may indicate the access network device not to perform bit rate control on the at least two QoS flows. In other words, when the user plane network element has ensured the bit rate of the service, the access network device may not perform the bit rate control, to reduce overheads of the access network device and improve running efficiency.

For example, the session management network element sends, to the access network device, the QoS profile associated with each of the at least two QoS flows. The QoS profile associated with each QoS flow does not include a bit rate, to indicate the access network device not to perform bit rate control on the QoS flow. In this way, signaling overheads can be reduced, and the communication efficiency can be improved. Alternatively, the QoS profile associated with each QoS flow includes second indication information, to indicate the access network device not to perform bit rate control on the QoS flow. In other words, an additional information element may be introduced to indicate to skip performing bit rate control, to avoid adjusting a structure of an existing information element. In this way, implementation difficulty can be reduced.

Optionally, if a bit rate for receiving a data flow of the service by the user plane network element is less than or equal to the GFBR, the user plane network element includes a first mark in the data flow of the service. The first mark may indicate the access network device to transmit the data flow of the service based on the bit rate of the data flow of the service, so that the access network device can perform rate control only on a data flow with a relatively low rate (less than or equal to the GFBR of the service). In this case, overheads of the access network device can be considered while a specific rate is guaranteed.

It may be understood that for a specific implementation principle of the design solution, refer to related descriptions in S808 to S811. Details are not described again.

In a possible design solution, when the session management network element sends the second configuration information to the access network device, the session management network element may indicate the user plane network element not to perform bit rate control on the at least two QoS flows. In other words, when the access network device has ensured the bit rate of the service, the user plane network element may not perform the bit rate control, to reduce overheads of the user plane network element and improve running efficiency.

For example, the session management network element may send, to the user plane network element, the QoS rule associated with each of the at least two QoS flows. The QoS rule associated with each QoS flow does not include a bit rate, to indicate the user plane network element not to perform bit rate control on the QoS flow. In this way, the signaling overheads can be reduced, and the communication efficiency can be improved. Alternatively, the QoS rule associated with each QoS flow includes third indication information, to indicate the user plane network element not to perform bit rate control on the QoS flow. In other words, an additional information element may be introduced to indicate to skip performing bit rate control, to avoid adjusting an existing information element. In this way, implementation difficulty can be reduced.

It may be understood that for a specific implementation principle of the design solution, refer to related descriptions in S907 to S910. Details are not described again.

The foregoing describes in detail communication methods provided in embodiments of this application with reference to FIG. 7A and FIG. 7B to FIG. 10. With reference to FIG. 10 and FIG. 11, the following describes in detail a communication apparatus configured to perform the communication method provided in embodiments of this application.

FIG. 11 is a first diagram of a structure of a communication apparatus according to an embodiment of this application. For example, as shown in FIG. 11, the communication apparatus 1100 includes a transceiver module 1101 and a processing module 1102. For ease of description, FIG. 11 merely shows main components of the communication apparatus.

Case 1: The communication apparatus 1100 is applicable to the communication system shown in FIG. 6, and performs a function of the policy control network element or the PCF in the foregoing method. The transceiver module 1101 may be configured to perform receiving and sending functions of the communication apparatus 1100. The processing module 1102 may be configured to perform a function of the communication apparatus 1100 other than the receiving and sending functions.

For example, the transceiver module 1101 is configured to receive a QoS quality of service request message from an application function network element, and the processing module 1102 is configured to determine, based on a QoS requirement, M PCC policy and charging control rules corresponding to a service, to control the transceiver module 1101 to send the M PCC rules to a session management network element. The QoS request message includes the QoS requirement of the service of the application function network element, N of the M PCC rules include first indication information, the first indication information indicates data flows of the service corresponding to the PCC rules including the first indication information to share a bit rate of the service, the N PCC rules are mapped to at least two QoS flows used to carry the data flows of the service, M and N are integers greater than 1, and N is less than or equal to M.

In a possible design solution, that the data flows of the service corresponding to the PCC rules including the first indication information share the bit rate of the service means that a sum of bit rates for transmitting the data flows of the service at a moment needs to match the bit rate of the service. For example, the bit rate of the service includes at least one of the following: a GFBR guaranteed flow bit rate or an MFBR maximum flow bit rate. That the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR.

In a possible design solution, the service includes an extended reality XR service.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11). The storage module stores a program or instructions. When the processing module 1102 executes the program or the instructions, the communication apparatus 1100 may perform the function of the policy control network element or the PCF in the foregoing method.

It may be understood that the communication apparatus 1100 may be a network device, for example, a policy control network element or a PCF, may be a chip (system) or another part or component that may be disposed in a network device, or may be an apparatus including a network device. This is not limited in this application.

In addition, for technical effects of the communication apparatus 1100, refer to the technical effects of the communication methods shown in FIG. 7A and FIG. 7B to FIG. 10. Details are not described herein again.

Case 2: The communication apparatus 1100 is applicable to the communication system shown in FIG. 6, and performs a function of the session management network element or the SMF in the foregoing method. The transceiver module 1101 may be configured to perform receiving and sending functions of the communication apparatus 1100. The processing module 1102 may be configured to perform a function of the communication apparatus 1100 other than the receiving and sending functions.

For example, the transceiver module 1101 is configured to: receive M PCC rules from a policy control network element, and send first configuration information to a user plane network element, and/or send second configuration information to an access network device. N of the M PCC rules include first indication information, the first indication information indicates data flows of a service corresponding to the PCC rules including the first indication information to share a bit rate of the service, M and N are integers greater than 1, N is less than or equal to M, the N PCC rules are mapped to at least two QoS flows used to carry the data flows of the service, and the first configuration information or the second configuration information indicates the at least two QoS flows to share the bit rate of the service.

In a possible design solution, that the data flows of the service corresponding to the PCC rules including the first indication information share the bit rate of the service means that a sum of bit rates for transmitting the data flows of the service at a moment needs to match the bit rate of the service. For example, the bit rate of the service includes at least one of the following: a GFBR guaranteed flow bit rate or an MFBR maximum flow bit rate. That the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR.

In a possible design solution, the processing module 1102 is configured to: map the N PCC rules to the at least two QoS flows, and determine the first configuration information and/or the second configuration information. The transceiver module 1101 is configured to: send the first configuration information to the user plane network element, and/or send the second configuration information to the access network device.

In a possible design solution, the first configuration information includes a QoS flow list, the QoS flow list indicates QoS flows in the QoS flow list to share the bit rate of the service, and the QoS flows in the QoS flow list include the at least two QoS flows.

In a possible design solution, the first configuration information includes one QoS rule associated with the at least two QoS flows, and the QoS rule indicates the at least two QoS flows to share the bit rate of the service.

In a possible design solution, the first configuration information includes a QoS rule associated with each of the at least two QoS flows, and the QoS rule associated with each QoS flow indicates the QoS flow to share the bit rate of the service.

Optionally, the transceiver module 1101 is configured to: when sending the first configuration information to the user plane network element, indicate the access network device not to perform bit rate control on the at least two QoS flows.

Further, the transceiver module 1101 is configured to send, to the access network device, a QoS profile associated with each of the at least two QoS flows. The QoS profile associated with each QoS flow does not include a bit rate, to indicate the access network device not to perform bit rate control on the QoS flow; or the QoS profile associated with each QoS flow includes second indication information, to indicate the access network device not to perform bit rate control on the QoS flow.

In a possible design solution, the second configuration information includes a QoS flow list, the QoS flow list indicates QoS flows in the QoS flow list to share the bit rate of the service, and the QoS flows in the QoS flow list include the at least two QoS flows.

In a possible design solution, the second configuration information includes at least two QoS profiles associated with the at least two QoS flows, and the QoS profile associated with each of the at least two QoS flows indicates the QoS flow to share the bit rate of the service.

Optionally, the transceiver module 1101 is configured to: when sending the second configuration information to the access network device, indicate the user plane network element not to perform bit rate control on the at least two QoS flows.

Further, the transceiver module 1101 is configured to send, to the user plane network element, a QoS rule associated with each of the at least two QoS flows, where the QoS rule associated with each QoS flow does not include a bit rate, to indicate the user plane network element not to perform bit rate control on the QoS flow; or the QoS rule associated with each QoS flow includes third indication information, to indicate the user plane network element not to perform bit rate control on the QoS flow.

In a possible design solution, the service includes an extended reality XR service.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11). The storage module stores a program or instructions. When the processing module 1102 executes the program or the instructions, the communication apparatus 1100 may perform the function of the session management network element or the SMF in the foregoing method.

It may be understood that the communication apparatus 1100 may be a network device, for example, a session management network element or an SMF, may be a chip (system) or another part or component that may be disposed in a network device, or may be an apparatus including a network device. This is not limited in this application.

In addition, for technical effects of the communication apparatus 1100, refer to the technical effects of the communication methods shown in FIG. 7A and FIG. 7B to FIG. 10. Details are not described herein again.

Case 3: The communication apparatus 1100 is applicable to the communication system shown in FIG. 6, and performs a function of the user plane network element or the UPF in the foregoing method. The transceiver module 1101 may be configured to perform receiving and sending functions of the communication apparatus 1100. The processing module 1102 may be configured to perform a function of the communication apparatus 1100 other than the receiving and sending functions.

For example, the transceiver module 1101 is configured to receive first configuration information from a session management network element, and the processing module 1102 is configured to control, based on the first configuration information, the transceiver module 1101 to transmit data flows of a service. The data flows of the service are mapped to at least two QoS flows, and the at least two QoS flows share a bit rate of the service.

In a possible design solution, the first configuration information includes a QoS flow list, the QoS flow list indicates QoS flows in the QoS flow list to share the bit rate of the service, and the QoS flows in the QoS flow list include the at least two QoS flows.

In a possible design solution, the first configuration information includes one QoS rule associated with the at least two QoS flows, and the QoS rule indicates the at least two QoS flows to share the bit rate of the service.

In a possible design solution, the first configuration information includes a QoS rule associated with each of the at least two QoS flows, and the QoS rule associated with each QoS flow indicates the QoS flow to share the bit rate of the service.

In a possible design solution, the processing module 1102 is configured to: determine, based on the first configuration information, that the at least two QoS flows share the bit rate of the service, and control, based on the at least two QoS flows sharing the bit rate of the service, the transceiver module 1101 to send the data flow of the service. A sum of bit rates for transmitting the data flows of the service in the at least two QoS flows at a moment matches the bit rate of the service.

For example, the bit rate of the service includes at least one of the following: a GFBR or an MFBR. That the sum of the bit rates for transmitting the data flows of the service in the at least two QoS flows matches the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR.

In a possible design solution, the bit rate of the service includes the GFBR, and the processing module 1102 is further configured to: if a bit rate for receiving a data flow of the service is less than or equal to the GFBR, include a first mark in the data flow of the service, where the first mark indicates an access network device to transmit the data flow of the service based on the bit rate of the data flow of the service.

In a possible design solution, the service includes an extended reality XR service.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11). The storage module stores a program or instructions. When the processing module 1102 executes the program or the instructions, the communication apparatus 1100 may perform the function of the user plane network element or the UPF in the foregoing method.

It may be understood that the communication apparatus 1100 may be a network device, for example, a user plane network element or a UPF, may be a chip (system) or another part or component that may be disposed in a network device, or may be an apparatus including a network device. This is not limited in this application.

In addition, for technical effects of the communication apparatus 1100, refer to the technical effects of the communication methods shown in FIG. 7A and FIG. 7B to FIG. 10. Details are not described herein again.

Case 4: The communication apparatus 1100 is applicable to the communication system shown in FIG. 6, and performs a function of the access network device or the RAN in the foregoing method. The transceiver module 1101 may be configured to perform receiving and sending functions of the communication apparatus 1100. The processing module 1102 may be configured to perform a function of the communication apparatus 1100 other than the receiving and sending functions.

For example, the transceiver module 1101 is configured to receive second configuration information from a session management network element, and the processing module 1102 is configured to control, based on the second configuration information, the transceiver module 1101 to transmit data flows of a service. The data flows of the service are mapped to at least two QoS flows, and the second configuration information indicates the at least two QoS flows to share a bit rate of the service.

In a possible design solution, the second configuration information includes a QoS flow list, the QoS flow list indicates QoS flows in the QoS flow list to share the bit rate of the service, and the QoS flows in the QoS flow list include the at least two QoS flows.

In a possible design solution, the second configuration information includes at least two QoS profiles associated with the at least two QoS flows, and the QoS profile associated with each of the at least two QoS flows indicates the QoS flow to share the bit rate of the service.

In a possible design solution,
the processing module 1102 is configured to: determine, based on the second configuration information, that the at least two QoS flows share the bit rate of the service, and control, based on the at least two QoS flows sharing the bit rate of the service, the transceiver module 1101 to send the data flow of the service. A sum of bit rates for transmitting the data flows of the service in the at least two QoS flows at a moment matches the bit rate of the service.

For example, the bit rate of the service includes at least one of the following: a GFBR or an MFBR. That the sum of the bit rates for transmitting the data flows of the service in the at least two QoS flows matches the bit rate of the service means that the sum of the bit rates for transmitting the data flows of the service in the at least two QoS flows is less than or equal to the GFBR; or the sum of the bit rates for transmitting the data flows of the service in the at least two QoS flows is greater than the GFBR, and the sum of the bit rates for transmitting the data flows of the service in the at least two QoS flows is less than or equal to the MFBR.

In a possible design solution, the service is an extended reality XR service.

Optionally, the transceiver module 1101 may include a sending module (not shown in FIG. 11) and a receiving module (not shown in FIG. 11). The sending module is configured to implement a sending function of the communication apparatus 1100, and the receiving module is configured to implement a receiving function of the communication apparatus 1100.

Optionally, the communication apparatus 1100 may further include a storage module (not shown in FIG. 11). The storage module stores a program or instructions. When the processing module 1102 executes the program or the instructions, the communication apparatus 1100 may perform the function of the access network device or the RAN in the foregoing method.

It may be understood that the communication apparatus 1100 may be a network device, for example, an access network device or a RAN, may be a chip (system) or another part or component that may be disposed in a network device, or may be an apparatus including a network device. This is not limited in this application.

In addition, for technical effects of the communication apparatus 1100, refer to the technical effects of the communication methods shown in FIG. 7A and FIG. 7B to FIG. 10. Details are not described herein again.

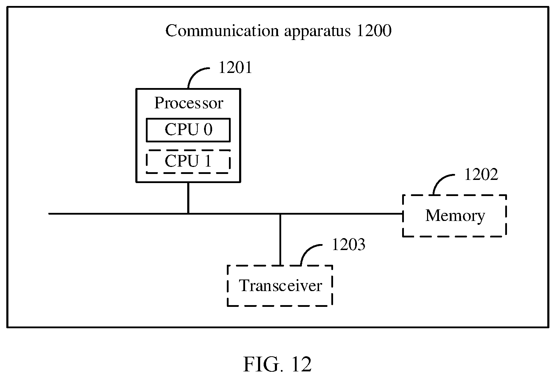

FIG. 12 is a second diagram of a structure of a communication apparatus according to an embodiment of this application. For example, the communication apparatus may be a terminal, or may be a chip (system) or another part or component that may be disposed in the terminal. As shown in FIG. 12, the communication apparatus 1200 may include a processor 1201. Optionally, the communication apparatus 1200 may further include a memory 1202 and/or a transceiver 1203. The processor 1201 is coupled to the memory 1202 and the transceiver 1203, for example, may be connected to the memory 1202 and the transceiver 1203 through a communication bus.

The following describes in detail each component of the communication apparatus 1200 with reference to FIG. 12.

The processor 1201 is a control center of the communication apparatus 1200, and may be a processor, or may be a generic term of a plurality of processing elements. For example, the processor 1201 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1201 may perform various functions of the communication apparatus 1200 by running or executing a software program stored in the memory 1202 and invoking data stored in the memory 1202, for example, perform the communication method shown in FIG. 7A and FIG. 7B to FIG. 10.

During specific implementation, in an embodiment, the processor 1201 may include one or more CPUs, for example, a CPU 0 and a CPU 1 shown in FIG. 12.

During specific implementation, in an embodiment, the communication apparatus 1200 may also include a plurality of processors, for example, the processor 1201 shown in FIG. 12 and a processor 1204. Each of the processors may be a single-core processor (single-CPU), or may be a multi-core processor (multi-CPU). The processor herein may be one or more devices, circuits, and/or processing cores configured to process data (for example, computer program instructions).

The memory 1202 is configured to store a software program for executing the solution of this application, and the processor 1201 controls execution of the software program. For a specific implementation, refer to the foregoing method embodiments. Details are not described herein again.

Optionally, the memory 1202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disk storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, this is not limited thereto. The memory 1202 may be integrated with the processor 1201, or may exist independently, and is coupled to the processor 1201 through an interface circuit (not shown in FIG. 12) of the communication apparatus 1200. This is not specifically limited in this embodiment of this application.

The transceiver 1203 is configured to communicate with another communication apparatus. For example, the communication apparatus 1200 is a terminal, and the transceiver 1203 may be configured to communicate with a network device or communicate with another terminal device. For another example, the communication apparatus 1200 is a network device, and the transceiver 1203 may be configured to communicate with a terminal or communicate with another network device.

Optionally, the transceiver 1203 may include a receiver and a transmitter (not separately shown in FIG. 12). The receiver is configured to implement a receiving function, and the transmitter is configured to implement a sending function.

Optionally, the transceiver 1203 may be integrated with the processor 1201, or may exist independently, and is coupled to the processor 1201 through an interface circuit (not shown in FIG. 12) of the communication apparatus 1200. This is not specifically limited in this embodiment of this application.

It may be understood that a structure of the communication apparatus 1200 shown in FIG. 12 does not constitute a limitation on the communication apparatus. An actual communication apparatus may include more or fewer parts than those shown in the figure, combine some parts, or have different part arrangement.

In addition, for technical effects of the communication apparatus 1200, refer to the technical effects of the method in the foregoing method embodiments. Details are not described herein again.

An embodiment of this application provides a communication system. The communication system includes a policy control network element, a session management network element, a user plane network element, and an access network device. The policy control network element, the session management network element, the user plane network element, and the access network device are configured to perform the methods shown in FIG. 7A and FIG. 7B to FIG. 10.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application.

The protection scope of this application shall be subject to the protection scope of the claims.

## Claims

1. A communication method, wherein the method comprises:
receiving (S703), by a policy control network element, a QoS quality of service request message from an application function network element, wherein the QoS request message comprises a QoS requirement of a service of the application function network element;
determining (S704), by the policy control network element based on the QoS requirement, M PCC policy and charging control rules corresponding to the service, wherein N of the M PCC rules comprise first indication information, the first indication information indicates data flows of the service corresponding to the PCC rules comprising the first indication information to share a bit rate of the service, the N PCC rules are mapped to at least two QoS flows used to carry the data flows of the service, M and N are integers greater than 1, and N is less than or equal to M; and
sending (S705), by the policy control network element, the M PCC rules to a session management network element,
wherein that the data flows of the service share the bit rate of the service means that a sum of bit rates for transmitting the data flows of the service at a moment needs to match the bit rate of the service, wherein only one shared resource is reserved for the at least two QoS flows.

2. The method according to claim 1, wherein the bit rate of the service comprises at least one of the following: a GFBR guaranteed flow bit rate or an MFBR maximum flow bit rate, and that the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR.

3. The method according to claim 1 or 2, wherein the service comprises an extended reality XR service.

4. A communication method, wherein the method comprises:
receiving (S706), by a session management network element, M PCC rules from a policy control network element, wherein N of the M PCC rules comprise first indication information, the first indication information indicates data flows of a service corresponding to the PCC rules comprising the first indication information to share a bit rate of the service, M and N are integers greater than 1, and N is less than or equal to M; and
sending (S707, S708), by the session management network element, first configuration information to a user plane network element, and/or sending second configuration information to an access network device, wherein the N PCC rules are mapped to at least two QoS flows used to carry the data flows of the service, and the first configuration information or the second configuration information indicates the at least two QoS flows to share the bit rate of the service,
wherein that the data flows of the service share the bit rate of the service means that a sum of bit rates for transmitting the data flows of the service at a moment needs to match the bit rate of the service, wherein only one shared resource is reserved for the at least two QoS flows.

5. The method according to claim 4, wherein the bit rate of the service comprises at least one of the following: a GFBR guaranteed flow bit rate or an MFBR maximum flow bit rate, and that the sum of the bit rates for transmitting the data flows of the service needs to match the bit rate of the service means that the sum of the bit rates for transmitting the data flows of the service is less than or equal to the GFBR; or the sum of the bit rates for transmitting the data flows of the service is greater than the GFBR, and the sum of the bit rates for transmitting the data flows of the service is less than or equal to the MFBR.

6. The method according to claim 4 or 5, wherein the sending, by the session management network element, first configuration information to a user plane network element, and/or sending second configuration information to an access network device comprises:
mapping, by the session management network element, the N PCC rules to the at least two QoS flows;
determining, by the session management network element, the first configuration information and/or the second configuration information; and
sending, by the session management network element, the first configuration information to the user plane network element, and/or sending the second configuration information to the access network device.

7. The method according to any one of claims 4 to 6, wherein the first configuration information comprises a QoS flow list, the QoS flow list indicates QoS flows in the QoS flow list to share the bit rate of the service, and the QoS flows in the QoS flow list comprise the at least two QoS flows.

8. The method according to any one of claims 4 to 6, wherein the first configuration information comprises one QoS rule associated with the at least two QoS flows, and the QoS rule indicates the at least two QoS flows to share the bit rate of the service; or
wherein the first configuration information comprises a QoS rule associated with each of the at least two QoS flows, and the QoS rule associated with each QoS flow indicates the QoS flow to share the bit rate of the service.

9. The method according to claim 7 or 8, wherein when the session management network element sends the first configuration information to the user plane network element, the method further comprises:
indicating, by the session management network element, the access network device not to perform bit rate control on the at least two QoS flows.

10. The method according to any one of claims 4 to 6, wherein the second configuration information comprises a QoS flow list, the QoS flow list indicates QoS flows in the QoS flow list to share the bit rate of the service, and the QoS flows in the QoS flow list comprise the at least two QoS flows; or
the second configuration information comprises at least two QoS profiles associated with the at least two QoS flows, and the QoS profile associated with each of the at least two QoS flows indicates the at least two QoS flows to share the bit rate of the service.

11. The method according to claim 10, wherein when the session management network element sends the second configuration information to the access network device, the method further comprises:indicating, by the session management network element, the user plane network element not to perform bit rate control on the at least two QoS flows.

12. A communication apparatus, wherein the communication apparatus comprises a processor and a memory, the memory is configured to store computer instructions, and when the processor executes the instructions, the communication apparatus is enabled to perform the method according to any one of claims 1 to 4.

13. A communication apparatus, wherein the communication apparatus comprises a processor and a memory, the memory is configured to store computer instructions, and when the processor executes the instructions, the communication apparatus is enabled to perform the method according to any one of claims 5 to 11.

14. A computer-readable storage medium, wherein the computer-readable storage medium comprises a computer program or instructions, and when the computer program or the instructions are run on a computer, the computer is enabled to perform the method according to any one of claims 1 to 4.

15. A computer-readable storage medium, wherein the computer-readable storage medium comprises a computer program or instructions, and when the computer program or the instructions are run on a computer, the computer is enabled to perform the method according to any one of claims 5 to 11.

## Patentansprüche

1. Kommunikationsverfahren, wobei das Verfahren Folgendes umfasst:
Empfangen (S703), durch ein Richtliniensteuerungsnetzelement, einer QoS-Dienstgüteanforderungsnachricht von einem Anwendungsfunktionsnetzelement, wobei die QoS-Anforderungsnachricht eine QoS-Anforderung eines Dienstes des Anwendungsfunktionsnetzelements umfasst;
Bestimmen (S704), durch das Richtliniensteuerungsnetzelement basierend auf der QoS-Anforderung, von M PCC-Richtlinien- und Abrechnungssteuerungsregeln, die dem Dienst entsprechen, wobei N der M PCC-Regeln erste Angabeinformationen umfassen, die ersten Angabeinformationen Datenflüsse des Dienstes angeben, die den PCC-Regeln entsprechen, welche die ersten Angabeinformationen dazu umfassen, eine Bitrate des Dienstes zu teilen, die N PCC-Regeln mindestens zwei QoS-Flüssen zugeordnet sind, die dazu verwendet werden, die Datenflüsse des Dienstes zu tragen, M und N ganze Zahlen größer als 1 sind und N kleiner oder gleich M ist; und
Senden (S705), durch das Richtliniensteuerungsnetzelement, der M PCC-Regeln an ein Sitzungsverwaltungsnetzelement,
wobei die Tatsache, dass sich die Datenflüsse des Dienstes die Bitrate des Dienstes teilen, bedeutet, dass eine Summe von Bitraten zum Übertragen der Datenflüsse des Dienstes zu einem Zeitpunkt mit der Bitrate des Dienstes übereinstimmen muss, wobei nur eine geteilte Ressource für die mindestens zwei QoS-Flüsse reserviert ist.

2. Verfahren nach Anspruch 1, wobei die Bitrate des Dienstes mindestens eines der Folgenden umfasst: eine garantierte Flussbitrate, GFBR, oder eine maximale Flussbitrate, MFBR, und die Tatsache, dass die Summe der Bitraten zum Übertragen der Datenflüsse des Dienstes mit der Bitrate des Dienstes übereinstimmen muss, bedeutet, dass die Summe der Bitraten zum Übertragen der Datenflüsse des Dienstes kleiner oder gleich der GFBR ist; oder die Summe der Bitraten zum Übertragen der Datenflüsse des Dienstes größer als die GFBR ist und die Summe der Bitraten zum Übertragen der Datenflüsse des Dienstes kleiner oder gleich der MFBR ist.

3. Verfahren nach Anspruch 1 oder 2, wobei der Dienst einen Extended-Reality-Dienst, XR-Dienst, umfasst.

4. Kommunikationsverfahren, wobei das Verfahren Folgendes umfasst:
Empfangen (S706), durch ein Sitzungsverwaltungsnetzelement, von M PCC-Regeln von einem Richtliniensteuerungsnetzelement, wobei N der M PCC-Regeln erste Angabeinformationen umfassen, die ersten Angabeinformationen Datenflüsse eines Dienstes angeben, die den PCC-Regeln entsprechen, welche die ersten Angabeinformationen umfassen, um eine Bitrate des Dienstes zu teilen, M und N ganze Zahlen größer als 1 sind und N kleiner oder gleich M ist; und
Senden (S707, S708), durch das Sitzungsverwaltungsnetzelement, erster Konfigurationsinformationen an ein Benutzerebenennetzelement und/oder Senden zweiter Konfigurationsinformationen an ein Zugangsnetzgerät, wobei die N PCC-Regeln mindestens zwei QoS-Flüssen zugeordnet sind, die dazu verwendet werden, die Datenflüsse des Dienstes zu tragen, und die ersten Konfigurationsinformationen oder die zweiten Konfigurationsinformationen die mindestens zwei QoS-Flüsse angeben, die sich die Bitrate des Dienstes zu teilen haben,
wobei die Tatsache, dass sich die Datenflüsse des Dienstes die Bitrate des Dienstes teilen, bedeutet, dass eine Summe von Bitraten zum Übertragen der Datenflüsse des Dienstes zu einem Zeitpunkt mit der Bitrate des Dienstes übereinstimmen muss, wobei nur eine geteilte Ressource für die mindestens zwei QoS-Flüsse reserviert ist.

5. Verfahren nach Anspruch 4, wobei die Bitrate des Dienstes mindestens eines der Folgenden umfasst: eine garantierte Flussbitrate, GFBR, oder eine maximale Flussbitrate, MFBR, und die Tatsache, dass die Summe der Bitraten zum Übertragen der Datenflüsse des Dienstes mit der Bitrate des Dienstes übereinstimmen muss, bedeutet, dass die Summe der Bitraten zum Übertragen der Datenflüsse des Dienstes kleiner oder gleich der GFBR ist; oder die Summe der Bitraten zum Übertragen der Datenflüsse des Dienstes größer als die GFBR ist und die Summe der Bitraten zum Übertragen der Datenflüsse des Dienstes kleiner oder gleich der MFBR ist.

6. Verfahren nach Anspruch 4 oder 5, wobei das Senden, durch das Sitzungsverwaltungsnetzelement, erster Konfigurationsinformationen an ein Benutzerebenennetzelement und/oder das Senden zweiter Konfigurationsinformationen an ein Zugangsnetzgerät Folgendes umfasst:
Zuordnen, durch das Sitzungsverwaltungsnetzelement, der N PCC-Regeln zu den mindestens zwei QoS-Flüssen;
Bestimmen, durch das Sitzungsverwaltungsnetzelement, der ersten Konfigurationsinformationen und/oder der zweiten Konfigurationsinformationen; und
Senden, durch das Sitzungsverwaltungsnetzelement, der ersten Konfigurationsinformationen an das Benutzerebenennetzelement und/oder Senden der zweiten Konfigurationsinformationen an das Zugangsnetzgerät.

7. Verfahren nach einem der Ansprüche 4 bis 6, wobei die ersten Konfigurationsinformationen eine QoS-Flussliste umfassen, die QoS-Flussliste QoS-Flüsse in der QoS-Flussliste angibt, die sich die Bitrate des Dienstes zu teilen haben, und die QoS-Flüsse in der QoS-Flussliste die mindestens zwei QoS-Flüsse umfassen.

8. Verfahren nach einem der Ansprüche 4 bis 6, wobei die ersten Konfigurationsinformationen eine QoS-Regel umfassen, die mit den mindestens zwei QoS-Flüssen verknüpft ist, und die QoS-Regel die mindestens zwei QoS-Flüsse angibt, die sich die Bitrate des Dienstes zu teilen haben; oder
wobei die ersten Konfigurationsinformationen eine QoS-Regel umfassen, die mit jedem der mindestens zwei QoS-Flüsse verknüpft ist, und die QoS-Regel, die mit jedem QoS-Fluss verknüpft ist, den QoS-Fluss angibt, der sich die Bitrate des Dienstes zu teilen hat.

9. Verfahren nach Anspruch 7 oder 8, wobei, wenn das Sitzungsverwaltungsnetzelement die ersten Konfigurationsinformationen an das Benutzerebenennetzelement sendet, das Verfahren ferner Folgendes umfasst:
Angeben, durch das Sitzungsverwaltungsnetzelement, gegenüber dem Zugangsnetzgerät, die Bitratensteuerung für die mindestens zwei QoS-Flüsse nicht durchzuführen.

10. Verfahren nach einem der Ansprüche 4 bis 6, wobei die zweiten Konfigurationsinformationen eine QoS-Flussliste umfassen, die QoS-Flussliste QoS-Flüsse in der QoS-Flussliste angibt, die sich die Bitrate des Dienstes zu teilen haben, und die QoS-Flüsse in der QoS-Flussliste die mindestens zwei QoS-Flüsse umfassen; oder die zweiten Konfigurationsinformationen mindestens zwei QoS-Profile, die mit den mindestens zwei QoS-Flüssen verknüpft sind, umfassen und das QoS-Profil, das mit jedem der mindestens zwei QoS-Flüsse verknüpft ist, die mindestens zwei QoS-Flüsse angibt, die sich die Bitrate des Dienstes zu teilen haben.

11. Verfahren nach Anspruch 10, wobei, wenn das Sitzungsverwaltungsnetzelement die zweiten Konfigurationsinformationen an das Zugangsnetzgerät sendet, das Verfahren ferner Folgendes umfasst: Angeben, durch das Sitzungsverwaltungsnetzelement, gegenüber dem Benutzerebenennetzelement, die Bitratensteuerung für die mindestens zwei QoS-Flüsse nicht durchzuführen.

12. Kommunikationsvorrichtung, wobei die Kommunikationsvorrichtung einen Prozessor und einen Speicher umfasst, wobei der Speicher dazu konfiguriert ist, Computeranweisungen zu speichern, und, wenn der Prozessor die Anweisungen ausführt, es der Kommunikationsvorrichtung ermöglicht wird, das Verfahren nach einem der Ansprüche 1 bis 4 durchzuführen.

13. Kommunikationsvorrichtung, wobei die Kommunikationsvorrichtung einen Prozessor und einen Speicher umfasst, wobei der Speicher dazu konfiguriert ist, Computeranweisungen zu speichern, und, wenn der Prozessor die Anweisungen ausführt, es der Kommunikationsvorrichtung ermöglicht wird, das Verfahren nach einem der Ansprüche 5 bis 11 durchzuführen.

14. Computerlesbares Speichermedium, wobei das computerlesbare Speichermedium ein Computerprogramm oder Anweisungen umfasst und, wenn das Computerprogramm oder die Anweisungen auf einem Computer ausgeführt werden, es dem Computer ermöglicht wird, das Verfahren nach einem der Ansprüche 1 bis 4 durchzuführen.

15. Computerlesbares Speichermedium, wobei das computerlesbare Speichermedium ein Computerprogramm oder Anweisungen umfasst und, wenn das Computerprogramm oder die Anweisungen auf einem Computer ausgeführt werden, es dem Computer ermöglicht wird, das Verfahren nach einem der Ansprüche 5 bis 11 durchzuführen.

## Revendications

1. Procédé de communication, dans lequel le procédé comprend :
la réception (S703), par un élément de réseau de commande de politique, d'un message de requête de qualité de service, QoS, à partir d'un élément de réseau de fonction d'application, dans lequel le message de requête QoS comprend une exigence QoS d'un service de l'élément de réseau de fonction d'application ;
la détermination (S704), par l'élément de réseau de commande de politique sur la base de l'exigence QoS, de M règles de commande de politique et de facturation PCC correspondant au service, dans lequel N des M règles PCC comprennent des premières informations d'indication, les premières informations d'indication indiquent que des flux de données du service correspondant aux règles PCC comprenant les premières informations d'indication doivent partager un débit binaire du service, les N règles PCC sont mappées à au moins deux flux QoS utilisés pour transporter les flux de données du service, M et N sont des entiers supérieurs à 1, et N est inférieur ou égal à M ; et
l'envoi (S705), par l'élément de réseau de commande de politique, des M règles PCC à un élément de réseau de gestion de session,
dans lequel le fait que les flux de données du service partagent le débit binaire du service signifie qu'une somme de débits binaires pour la transmission des flux de données du service à un instant donné doit correspondre au débit binaire du service, dans lequel une seule ressource partagée est réservée pour les au moins deux flux QoS.

2. Procédé selon la revendication 1, dans lequel le débit binaire du service comprend au moins l'un des éléments suivants : un débit binaire de flux garanti, GFBR, ou un débit binaire de flux maximal, MFBR, et le fait que la somme des débits binaires pour la transmission des flux de données du service doit correspondre au débit binaire du service signifie que la somme des débits binaires pour la transmission des flux de données du service est inférieure ou égale au GFBR ; ou que la somme des débits binaires pour la transmission des flux de données du service est supérieure au GFBR et que la somme des débits binaires pour la transmission des flux de données du service est inférieure ou égale au MFBR.

3. Procédé selon la revendication 1 ou 2, dans lequel le service comprend un service de réalité étendue XR.

4. Procédé de communication, dans lequel le procédé comprend :
la réception (S706), par un élément de réseau de gestion de session, de M règles PCC à partir d'un élément de réseau de commande de politique, dans lequel N des M règles PCC comprennent des premières informations d'indication, les premières informations d'indication indiquent des flux de données d'un service correspondant aux règles PCC comprenant les premières informations d'indication doivent partager un débit binaire du service, M et N sont des entiers supérieurs à 1, et N est inférieur ou égal à M ; et
l'envoi (S707, S708), par l'élément de réseau de gestion de session, de premières informations de configuration à un élément de réseau de plan utilisateur et/ou l'envoi de secondes informations de configuration à un dispositif de réseau d'accès, dans lequel les N règles PCC sont mappées à au moins deux flux QoS utilisés pour transporter les flux de données du service, et les premières informations de configuration ou les secondes informations de configuration indiquent que les au moins deux flux QoS doivent partager le débit binaire du service,
dans lequel le fait que les flux de données du service partagent le débit binaire du service signifie qu'une somme de débits binaires pour la transmission des flux de données du service à un instant donné doit correspondre au débit binaire du service, dans lequel une seule ressource partagée est réservée pour les au moins deux flux QoS.

5. Procédé selon la revendication 4, dans lequel le débit binaire du service comprend au moins l'un des éléments suivants : un débit binaire de flux garanti, GFBR, ou un débit binaire de flux maximal, MFBR, et le fait que la somme des débits binaires pour la transmission des flux de données du service doit correspondre au débit binaire du service signifie que la somme des débits binaires pour la transmission des flux de données du service est inférieure ou égale au GFBR ; ou que la somme des débits binaires pour la transmission des flux de données du service est supérieure au GFBR et que la somme des débits binaires pour la transmission des flux de données du service est inférieure ou égale au MFBR.

6. Procédé selon la revendication 4 ou 5, dans lequel l'envoi, par l'élément de réseau de gestion de session, de premières informations de configuration à un élément de réseau de plan utilisateur, et/ou l'envoi de secondes informations de configuration à un dispositif de réseau d'accès comprend :
le mappage, par l'élément de réseau de gestion de session, des N règles PCC aux au moins deux flux QoS ;
la détermination, par l'élément de réseau de gestion de session, des premières informations de configuration et/ou des secondes informations de configuration ; et
l'envoi, par l'élément de réseau de gestion de session, des premières informations de configuration à l'élément de réseau de plan utilisateur, et/ou l'envoi des secondes informations de configuration au dispositif de réseau d'accès.

7. Procédé selon l'une quelconque des revendications 4 à 6, dans lequel les premières informations de configuration comprennent une liste de flux QoS, la liste de flux QoS indique que des flux QoS dans la liste de flux QoS doivent partager le débit binaire du service, et les flux QoS dans la liste de flux QoS comprennent les au moins deux flux QoS.

8. Procédé selon l'une quelconque des revendications 4 à 6, dans lequel les premières informations de configuration comprennent une règle QoS associée aux au moins deux flux QoS, et la règle QoS indique que les au moins deux flux QoS doivent partager le débit binaire du service ; ou
dans lequel les premières informations de configuration comprennent une règle QoS associée à chacun des au moins deux flux QoS, et la règle QoS associée à chaque flux QoS indique que le flux QoS doit partager le débit binaire du service.

9. Procédé selon la revendication 7 ou 8, dans lequel, lorsque l'élément de réseau de gestion de session envoie les premières informations de configuration à l'élément de réseau de plan utilisateur, le procédé comprend en outre :
l'indication, par l'élément de réseau de gestion de session, que le dispositif de réseau d'accès ne doit pas réaliser de commande de débit binaire sur les au moins deux flux QoS.

10. Procédé selon l'une quelconque des revendications 4 à 6, dans lequel les secondes informations de configuration comprennent une liste de flux QoS, la liste de flux QoS indique que des flux QoS dans la liste de flux QoS doivent partager le débit binaire du service, et les flux QoS dans la liste de flux QoS comprennent les au moins deux flux QoS ; ou
les secondes informations de configuration comprennent au moins deux profils QoS associés aux au moins deux flux QoS, et le profil QoS associé à chacun des au moins deux flux QoS indique que les au moins deux flux QoS doivent partager le débit binaire du service.

11. Procédé selon la revendication 10, dans lequel lorsque l'élément de réseau de gestion de session envoie les secondes informations de configuration au dispositif de réseau d'accès, le procédé comprend en outre : l'indication, par l'élément de réseau de gestion de session, que l'élément de réseau de plan utilisateur ne doit pas réaliser de commande de débit binaire sur les au moins deux flux QoS.

12. Appareil de communication, dans lequel l'appareil de communication comprend un processeur et une mémoire, la mémoire est configurée pour stocker des instructions informatiques, et lorsque le processeur exécute les instructions, l'appareil de communication est activé pour réaliser le procédé selon l'une quelconque des revendications 1 à 4.

13. Appareil de communication, dans lequel l'appareil de communication comprend un processeur et une mémoire, la mémoire est configurée pour stocker des instructions informatiques, et lorsque le processeur exécute les instructions, l'appareil de communication est activé pour réaliser le procédé selon l'une quelconque des revendications 5 à 11.

14. Support de stockage lisible par ordinateur, dans lequel le support de stockage lisible par ordinateur comprend un programme informatique ou des instructions, et lorsque le programme informatique ou les instructions sont exécutés sur un ordinateur, l'ordinateur est activé pour réaliser le procédé selon l'une quelconque des revendications 1 à 4.

15. Support de stockage lisible par ordinateur, dans lequel le support de stockage lisible par ordinateur comprend un programme informatique ou des instructions, et lorsque le programme informatique ou les instructions sont exécutés sur un ordinateur, l'ordinateur est activé pour réaliser le procédé selon l'une quelconque des revendications 5 à 11.
